# EUROPÄISCHE PATENTSCHRIFT

(11) **EP 4 114 152 B1**
(45) Veröffentlichungstag und Bekanntmachung des Hinweises auf die Patenterteilung: **19.02.2025**
(21) Anmeldenummer: 21183465.0
(22) Anmeldetag: 02.07.2021
(51) Int. Cl.: H05K 5/02, G06F 21/86

(54) **GERÄT MIT GEHÄUSE, AUSSENBEREICHSVORRICHTUNG UND VERFAHREN ZUM BETREIBEN EINES GERÄTS**
DEVICE WITH HOUSING, EXTERIOR DEVICE AND A METHOD FOR OPERATING A DEVICE
DISPOSITIF POURVU DE BOÎTIER, DISPOSITIF EXTÉRIEUR ET PROCÉDÉ DE FONCTIONNEMENT D'UN APPAREIL

(43) Veröffentlichungstag der Anmeldung: 04.01.2023
(73) Patentinhaber: CGF Counsel Group Frankfurt AG, 60549 Frankfurt (DE)
(72) Erfinder: TREIBER, Wilhelm, 96253 Untersiemau-Ziegelsdorf (DE); EIWAN, Ulrich, 83123 Amerang (DE)
(74) Vertreter: Ter Meer Steinmeister & Partner

(56) Entgegenhaltungen:
- DE-A1- 102019 007 057
- US-B2- 9 596 734

## Beschreibung

### TECHNISCHES GEBIET DER ERFINDUNG

Die Erfindung betrifft ein Gerät mit einem Lichtsensor der Umgebungslicht detektiert und ein Gehäuse aufweist, das mindestens eine Gehäusedurchbohrung umfasst. Die Erfindung betrifft zudem ein System aufweisend das Gerät und eine Außenbereichsvorrichtung mit einer Montagehalterung zum Verbinden/Befestigen des Geräts mit der Außenbereichsvorrichtung. Die Außenbereichsvorrichtung kann ein Stadtmöbel oder ein Straßenmöbel sein. Insbesondere ist das Gerät ein elektronisches Gerät, beispielsweise eine Energieversorgungskomponente oder eine Netzwerkkomponente, beispielsweise ein aktives Kopplungselement in einem Netzwerk, wie Netzwerkweiche oder Netzwerkrouter. Die Erfindung betrifft zudem ein Verfahren zum Betreiben des Geräts.

### TECHNISCHER HINTERGRUND

Außenbereichsvorrichtungen (Stadtmöbel oder Straßenmöbel), wie Masten oder Schaltschränke, sind ein allgegenwärtiger Bestandteil der städtischen und ländlichen Landschaft. Beispielsweise kann ein Mast mit einer oder mehreren elektrischen Licht-Funktionseinheiten, also Beleuchtungsmittel, entlang einer Straße oder eines Gehwegs angeordnet sein, um einem Autofahrer und/oder Fußgänger zu helfen, nachts besser zu sehen bzw. sich besser zu orientieren. Zusätzlich oder alternativ kann an einen Mast eine oder mehrere elektronische Informations-Funktionseinheiten, wie Verkehrszeichen, Ampel, Verkehrszähler oder Mautprüfer, angeordnet sein, die zur Beobachtung und Steuerung eines Verkehrsflusses auf der Straße oder dem Gehweg eingesetzt werden. Zusätzlich oder alternativ kann an einem Mast ein Beobachtungs- oder Überwachungsgerät, wie eine Kamera oder ein Verkehrszähler, als elektrische Funktionseinheit angeordnet sein, die zur Beobachtung und Überwachung von Plätzen oder Straßen dient.

Außenbereichsvorrichtungen können für ein "Smart City" Konzept verwendet werden. "Smart City" ist dabei ein Sammelbegriff für ein gesamtheitliches Entwicklungskonzept, das darauf abzielt, eine Landschaft, insbesondere Städte, effizient, technologisch fortschrittlich, ökologisch und sozial inklusiv zu gestalten. Diese Konzepte sollen energieeffizient, emissionsarm, sicher und kostengünstig sein, um Zukunftsthemen, wie eine flächendeckende Breitbandvernetzung, eine flächendeckende E-Mobilität, eine Verkehrsbeobachtung bzw. -überwachung und/oder eine erhöhte Sicherheit zu ermöglichen. Dazu können die Außenbereichsvorrichtungen mit elektrischen Funktionseinheiten, wie Kfz-Ladestationen etc., ausgestattet werden.

Die Smart City Konzepte benötigen ein Daten-Netzwerk. Derzeit ist eine DatenKommunikation zwischen einer entfernten Netzwerkkomponente, bspw. einem Server, einer Basisnetzwerkkomponente (Backbone-Komponente), und einer Funktionseinheit der Außenbereichsvorrichtung nicht abgesichert ist. Dieses Netzwerk, die entfernte Netzwerkkomponente oder die Funktionseinheit kann dadurch Cyber-Angriffen ausgesetzt sein. Ein Angreifer, der beispielsweise die Funktionseinheit oder das Netzwerk oder die entfernte Netzwerkkomponente manipulieren möchte, wird nur unzureichend bei der entfernten Netzwerkkomponente oder bei der Funktionseinheit erkannt und kann so erheblichen Schaden anrichten, beispielsweise indem er eine Licht- oder Ampelsteuerung manipuliert, einen Ladevorgang für ein Elektrofahrzeug sabotiert und/oder unerlaubt Daten von der Funktionseinheit abzweigt. Auch die in der Datenkommunikation verwendeten sicherheitsrelevanten Daten, wie private Schlüssel, Zertifikate, IP-Adressen oder Passwörter könnten so in unerlaubter Weise ausgelesen werden.

Um einen Manipulationsversuch an einer der Funktionseinheiten und/oder dem Netzwerk zuverlässig zu erkennen, muss eine entsprechende Absicherung bzw. Manipulationserkennung vorgesehen werden. Beispielsweise sind zusätzliche Sensoren an oder in der Außenbereichsvorrichtung vorgesehen, um ungewöhnliche Umwelt- bzw. Umgebungszustände zu entdecken.

So ist beispielsweise in der DE 10 2019 007 058 A1 vorgesehen, einen Lichtsensor, ein Schaltsensor und/oder einen Bewegungssensor in einem Gerät (=elektrische Netzwerkkomponente) der Außenbereichsvorrichtung vorzusehen, um eine Alarmsituation an das Netzwerk zu melden und/oder um sensible Daten, wie Netzzugangsdaten, zu löschen (Stichwort: "Zeroize").

In US 9,596,734 Σ32 wird ein Verfahren zur tageslichtabhängigen Kontrolle einer Beleuchtungsvorrichtung. Eine nutzerseitige Manipulation zur Erhöhung der Lichtintensität der Beleuchtungsvorrichtung wird erkannt und auf einen eingestellten Wert, beispielsweise 70% Dimmen, geregelt.

Die korrekte Bewertung der Lichtsensor-Ausgangssignale erweist sich als problematisch. Beispielsweise sind Lichtquellen in dem Gerät, an dem Gerät oder innerhalb der Außenbereichsvorrichtung angeordnet, die Störlichtquellen sind und so Fehlalarme auslösen.

Das Gerät ist insbesondere in einer Außenbereichsvorrichtung vorgesehen, in der sowohl Lichtquellen als auch Lichtsensor aufgrund limitiertem Platzangebot auf einer gemeinsamen Oberseite des Gehäuses angeordnet sind. Dies bedingt eine räumliche Nähe von Lichtquelle(n) und Lichtsensor. Dies erschwert die korrekte Bewertung des Lichtsensorsignals zusätzlich.

### ZUSAMMENFASSUNG DER ERFINDUNG

Der Erfindung liegt die Aufgabe zu Grunde, ein Gerät zu schaffen, das eine Datenkommunikation zwischen einer entfernten Netzwerkkomponente und einer Funktionseinheit absichert. Insbesondere soll mit dem Gerät, beispielsweise einer Netzwerkkomponente, wie Switch oder Router, bevorzugt einer Netzwerkkomponente in einer Smart-City Umgebung, erreicht werden, dass ein Angriff oder ein Manipulationsversuch auf eine Datenkommunikation, das Gerät, das Netzwerk selbst oder eine an das Gerät angeschlossene Funktionseinheit frühzeitig erkannt wird und als Alarm an die entfernte Netzwerkkomponente gemeldet wird.

Zudem sollten vertrauliche bzw. sicherheitsrelevante Informationen, beispielsweise aus einem Speicher des Geräts oder einer mit dem Gerät verbundenen Funktionseinheit, nicht unerlaubt abgegriffen werden können. Dabei soll der Datenschutz eingehalten werden, denn öffentlich erfasste Daten unterliegen der Vertraulichkeit und müssen vor unberechtigten Zugriffen zuverlässig geschützt werden.

Eine bestehende Infrastruktur muss dabei weitestgehend weiterverwendet werden können, es soll insbesondere der Austausch von bereits installierten Außenbereichsvorrichtungen oder entfernten Netzwerkkomponenten oder Funktionseinheiten vermieden werden. Auch soll an den bestehenden Außenbereichsvorrichtungen keine bauliche Veränderung, wie Anbringen von zusätzlicher Sensorik, durchgeführt werden müssen.

Eine Alarmierung muss dabei zuverlässig erfolgen. Es sollen keine internen Störlichtquellen zur Fehlalarmierung durch einen Lichtsensor führen.

Die Aufgabe wird gelöst durch die Merkmale der unabhängigen Ansprüche. Bevorzugte Ausführungsformen sind in den abhängigen Ansprüchen angegeben.

Die Erfindung umfasst ein Gerät mit einem Gehäuse. Das Gerät weist einen Lichtsensor zum Detektieren von Umgebungslicht auf. Im Gehäuse ist zumindest eine Lichtquelle angeordnet. Das Gehäuse weist zumindest eine Gehäusedurchbohrung auf. Diese zumindest eine Gehäusedurchbohrung ist eingerichtet zum Weiterleiten von mittels der zumindest einen Lichtquelle erzeugten Lichts aus dem Gehäuse heraus. Das Gerät umfasst eine Steuereinheit, die eingerichtet ist, jede Lichtquelle zu deaktivieren, um das Umgebungslicht mittels des Lichtsensors zu detektieren.

Ein Gehäuse ist eine feste Umhüllung aller Komponenten des Geräts. Das Gehäuse kann alle Komponenten des Geräts einschließen. Das Gehäuse kann das Gerät und alle Komponenten des Geräts vor äußeren Umwelteinflüssen, wie Schmutz, Feuchtigkeit, Elektromagnetismus, Druck, etc. schützen. Das Gehäuse kann eine Schutzklassifizierung, beispielsweise nach Standard IP67 oder IP68 aufweisen.

Das Gehäuse hat ein Gehäuseinneres. Das Volumen des Gehäuseinneren ist durch das Gehäuse begrenzt.

Das Gehäuse umfasst zumindest eine Gehäusedurchbohrung. Die Durchbohrung ist ein Loch bzw. ein Durchbruch im Gehäuse, das sich von einer Außenoberseite zu einer Innenoberseite des Gehäuses ohne Unterbrechungen erstreckt. Die Form der Gehäusedurchbohrung ist beliebig, sie ist meist rund, kann aber auch als Langloch oder Mehrkantenloch (Dreikant, Vierkant, Sechskant, etc.) eine unrunde Form aufweisen.

Die Position der Gehäusedurchbohrung im Gehäuse ist beliebig, solange das Weiterleiten gewährleistet ist.

Die Größe der Durchbohrung ist so zu wählen, dass einerseits noch ein ausreichender Schutz durch das Gehäuse gewährleistet ist, andererseits das Licht entsprechend - zunächst ohne Hilfsmittel - weitergeleitet werden kann.

Das Gerät umfasst einen Lichtsensor, auch als Detektor, als Fotodetektor, als optischer Detektor, als optoelektronischer Sensor oder als Fühler bezeichnet. Der Lichtsensor ist ein elektronisches Bauelement, das eine Lichtmenge qualitativ oder als Messgröße quantitativ erfassen kann. Diese Lichtmenge wird mittels eines fotoelektrischen Effektes erfasst und in ein von der Steuereinheit des Geräts verarbeitbares elektrisches Sensorausgangssignal umgeformt und bereitgestellt. Dabei kann die Steuereinheit die Umformung vornehmen. Alternativ kann der Lichtsensor diese Umformung selbst vornehmen.

Der Lichtsensor ist dazu eingerichtet, Umgebungslicht zu detektieren und dieses Umgebungslicht unter Nutzung des fotoelektrischen Effekts in ein elektrisches Signal umzuwandeln oder in einen von der Umgebungslichtmenge abhängigen elektrischen Widerstandswert umzuwandeln. Beispielsweise wird eine Fotodiode, ein Fototransistor und/oder ein Fotowiderstand als Lichtsensor eingesetzt.

Als Umgebungslicht wird dabei Licht bzw. elektromagnetische Strahlung verstanden, das das Gehäuse unmittelbar umgibt. Das Umgebungslicht ist insbesondere kein Licht, das im Gehäuse erzeugt wurde und/oder das aus dem Gehäuse herausgeleitet wird.

Das Umgebungslicht kann dabei das Licht in unmittelbarer Nähe des Geräts, beispielsweise das auf eine Oberseite des Gehäuses des Geräts treffendes Licht, sein.

Das Umgebungslicht kann dabei das Licht in unmittelbarer Nähe des Geräts sein, wobei das Gerät in einem im Wesentlichen lichtdichten Hohlraum einer Außenbereichsvorrichtung montiert/eingebracht ist.

Der Hohlraum kann mittels einer Öffnung in der Außenbereichsvorrichtung geöffnet werden. Beim Öffnen der Öffnung kann die Lichtmenge in unmittelbarer Nähe des Geräts wesentlich erhöht sein. Die erhöhte Lichtmenge kann vom Lichtsensor erfasst werden. Die erfasste Lichtmenge kann von einer Lichtsensorsteuerung und/oder der Steuereinheit ausgewertet werden. Die Auswertung kann einen Vergleich mit einem vordefinierten Schwellwert umfassen. Der Vergleich kann das Erkennen einer Alarmsituation ergeben, wenn die erfasste Lichtmenge oberhalb des vordefinierten Schwellwerts ist.

Im Gehäuse ist zumindest eine Lichtquelle angeordnet. Das von der zumindest einen Lichtquelle erzeugte Licht wird im Gehäuse erzeugt. Das erzeugte Licht ist insbesondere kein Umgebungslicht, das von außerhalb des Gehäuses in das Gehäuse eingeleitet wurde. Es kann aufgrund einer Position, einer Form und/oder einer Größe einer Gehäusedurchbohrung des Gehäuses aus dem Gehäuse herausgeleitet werden.

Die Lichtquelle(n) können dazu dienen, einem Benutzer Statusinformationen zu dem Gerät anzuzeigen. Es können duale Lichtquellen verwendet werden, die je nach Ansteuerung Licht mit einer ersten Wellenlänge oder Licht mit einer zweiten, von der ersten Wellenlänge verschiedenen Wellenlänge (bspw. rot/grün oder gelb/grün oder gelb/orange, usw.) erzeugen können.

Es kann eine erste Lichtquelle des Geräts vorgesehen sein, die das Anliegen einer Versorgungsspannung an einem Energieversorgungsanschluss des Geräts anzeigen kann. Dieses Anzeigen ist beispielsweise durch ein dauerhaftes, konstantes Licht einer bestimmten Wellenlänge (bspw. rot oder grün) realisiert.

Es kann eine zweite Lichtquelle des Geräts vorgesehen sein, die einen Status bezüglich eines ersten Funktionseinheitsanschlusses des Geräts anzeigen kann. Dieses Anzeigen ist beispielsweise durch ein unregelmäßiges Aufleuchten der Lichtquelle entsprechend übertragener Daten zwischen einer am Gerät angeschlossenen Funktionseinheit und dem Netzwerk oder dem Gerät in einer bestimmten Wellenlänge (bspw. rot oder grün) realisiert. Dieses Anzeigen ist alternativ oder zusätzlich durch ein dauerhaftes, konstantes Licht zur Anzeige einer aufgebauten Datenverbindung zwischen einer Funktionseinheit und dem Gerät über den ersten Funktionseinheitsanschluss des Geräts in einer bestimmten Wellenlänge (bspw. rot oder grün) realisiert. Durch Modulation des Lichts von der zweiten Lichtquelle kann auch ein Status, ein PoE-Status, eine Alarmsituation und/oder eine Überhitzung des ersten Funktionseinheitenanschlusses angezeigt werden.

Es kann eine dritte Lichtquelle des Geräts vorgesehen sein, die einen Status bezüglich eines zweiten Funktionseinheitsanschlusses des Geräts anzeigen kann. Dieses Anzeigen ist beispielsweise durch ein unregelmäßiges Aufleuchten der Lichtquelle entsprechend übertragener Daten zwischen einer am Gerät angeschlossenen Funktionseinheit und dem Netzwerk oder dem Gerät in einer bestimmten Wellenlänge (bspw. rot oder grün) realisiert. Dieses Anzeigen ist alternativ oder zusätzlich durch ein dauerhaftes, konstantes Licht zur Anzeige einer aufgebauten Datenverbindung zwischen einer Funktionseinheit und dem Gerät über den zweiten Funktionseinheitsanschluss des Geräts in einer bestimmten Wellenlänge (bspw. rot oder grün) realisiert. Durch Modulation des Lichts von der dritten Lichtquelle kann auch ein Status, ein PoE-Status, eine Alarmsituation und/oder eine Überhitzung des zweiten Funktionseinheitenanschlusses angezeigt werden.

Es kann eine vierte Lichtquelle des Geräts vorgesehen sein, die einen Status bezüglich eines dritten Funktionseinheitsanschlusses des Geräts anzeigen kann. Dieses Anzeigen ist beispielsweise durch ein unregelmäßiges Aufleuchten der Lichtquelle entsprechend übertragener Daten zwischen einer am Gerät angeschlossenen Funktionseinheit und dem Netzwerk oder dem Gerät in einer bestimmten Wellenlänge (bspw. rot oder grün) realisiert. Dieses Anzeigen ist alternativ oder zusätzlich durch ein dauerhaftes, konstantes Licht zur Anzeige einer aufgebauten Datenverbindung zwischen einer Funktionseinheit und dem Gerät über den dritten Funktionseinheitsanschluss des Geräts in einer bestimmten Wellenlänge (bspw. rot oder grün) realisiert. Durch Modulation des Lichts von der vierten Lichtquelle kann auch ein Status, ein PoE-Status, eine Alarmsituation und/oder eine Überhitzung des dritten Funktionseinheitenanschlusses angezeigt werden.

Es kann eine fünfte Lichtquelle des Geräts vorgesehen sein, die einen Status bezüglich eines vierten Funktionseinheitsanschlusses des Geräts anzeigen kann. Dieses Anzeigen ist beispielsweise durch ein unregelmäßiges Aufleuchten der Lichtquelle entsprechend übertragener Daten zwischen einer am Gerät angeschlossenen Funktionseinheit und dem Netzwerk oder dem Gerät in einer bestimmten Wellenlänge (bspw. rot oder grün) realisiert. Dieses Anzeigen ist alternativ oder zusätzlich durch ein dauerhaftes, konstantes Licht zur Anzeige einer aufgebauten Datenverbindung zwischen einer Funktionseinheit und dem Gerät über den vierten Funktionseinheitsanschluss des Geräts in einer bestimmten Wellenlänge (bspw. rot oder grün) realisiert. Durch Modulation des Lichts von der fünften Lichtquelle kann auch ein Status, ein PoE-Status, eine Alarmsituation und/oder eine Überhitzung des vierten Funktionseinheitenanschlusses angezeigt werden.

Es kann eine sechste Lichtquelle des Geräts vorgesehen sein, die einen Status an einem ersten Netzwerkanschluss des Geräts anzeigen kann. Dieses Anzeigen ist beispielsweise durch ein unregelmäßiges Aufleuchten der Lichtquelle entsprechend übertragener Daten zwischen dem Gerät und dem Netzwerk in einer bestimmten Wellenlänge (bspw. rot oder grün) realisiert. Dieses Anzeigen ist alternativ oder zusätzlich durch ein dauerhaftes, konstantes Licht zur Anzeige einer aufgebauten Datenverbindung zwischen dem Gerät und dem Netzwerk über den ersten Netzwerkanschluss des Geräts in einer bestimmten Wellenlänge (bspw. rot oder grün) realisiert. Durch Modulation des Lichts von der sechsten Lichtquelle kann auch ein Status, ein PoE-Status, eine Alarmsituation und/oder eine Überhitzung des ersten Netzwerkanschlusses angezeigt werden.

Es kann eine siebte Lichtquelle des Geräts vorgesehen sein, die einen Status an einem zweiten Netzwerkanschluss des Geräts anzeigen kann. Dieses Anzeigen ist beispielsweise durch ein unregelmäßiges Aufleuchten der Lichtquelle entsprechend übertragener Daten zwischen dem Gerät und dem Netzwerk in einer bestimmten Wellenlänge (bspw. rot oder grün) realisiert. Dieses Anzeigen ist alternativ oder zusätzlich durch ein dauerhaftes, konstantes Licht zur Anzeige einer aufgebauten Datenverbindung zwischen dem Gerät und dem Netzwerk über den zweiten Netzwerkanschluss des Geräts in einer bestimmten Wellenlänge (bspw. rot oder grün) realisiert. Durch Modulation des Lichts von der siebten Lichtquelle kann auch ein Status, ein PoE-Status, eine Alarmsituation und/oder eine Überhitzung des zweiten Netzwerkanschlusses angezeigt werden.

Es kann eine achte Lichtquelle des Geräts vorgesehen sein, die den Ladezustand einer Software oder einer Firmware im Gerät anzeigen kann. Dieses Anzeigen ist beispielsweise durch ein dauerhaftes, konstantes Licht einer bestimmten Wellenlänge (bspw. rot oder grün) realisiert. Dieses Anzeigen ist beispielsweise ein regelmäßiges Aufleuchten der achten Lichtquelle, wenn ein Ladevorgang (Booten) der Software nicht erfolgreich ausgeführt wurde.

Es können weitere Lichtquellen des Geräts vorgesehen sein, die beispielsweise zusätzliche Statusmeldung(en) bezüglich der Funktionseinheitenanschlüsse, einen PoE-Status, eine Alarmsituation und/oder eine Überhitzung des Geräts oder eines der Funktionsanschlüsse anzeigen.

Für das Weiterleiten von dem erzeugten Licht bedarf es in einer einfachen Ausgestaltung keinerlei weiterer Hilfsmittel in/von dem Gehäuse bzw. der Gehäusedurchbohrung. Somit wird einzig anhand von einer Position, einer Größe und einer Form der Gehäusedurchbohrung das Weiterleiten des erzeugten Lichts aus dem Gehäuse heraus ermöglicht.

Das Gerät umfasst eine Steuereinheit. Die Steuereinheit ist beispielsweise ein integrierter Halbleiterchip. Die Steuereinheit ist beispielsweise ein Mikrokontroller, ein Mikroprozessor, ein Field Programmable Gate Array (FPGA), ein ASIC, ein Signalprozessor oder ein Grafikprozessor.

Diese Steuereinheit ist dazu eingerichtet jede Lichtquelle des Geräts zu aktivieren und/oder zu deaktivieren. Eine aktivierte Lichtquelle erzeugt Licht. Eine deaktivierte Lichtquelle erzeugt kein Licht.

Die Steuereinheit kann mit einer Versorgungsspannung jeder Lichtquelle verbunden sein. Zum Deaktivieren kann die Steuereinheit die Versorgungsspannung von jeder Lichtquelle einzeln oder von allen Lichtquellen gemeinsam trennen oder ausschalten.

Die Steuereinheit kann alternativ oder zusätzlich mit einem Steuereingang jeder Lichtquelle einzeln verbunden sein. Zum Deaktivieren kann die Steuereinheit ein Steuersignal an den Steuereingang jeder Lichtquelle einzeln oder allen Lichtquellen gemeinsam bereitstellen. Dieses Bereitstellen kann drahtgebunden oder drahtlos erfolgen.

Die Steuereinheit kann alternativ oder zusätzlich mit einem Steuereingang einer LED-Ansteuerung für jede Lichtquelle einzeln oder alle Lichtquellen gemeinsam verbunden sein. Zum Deaktivieren kann die Steuereinheit ein Steuersignal an diesen Steuereingang LED-Ansteuerung bereitstellen. Dieses Bereitstellen kann drahtgebunden oder drahtlos erfolgen.

Der Lichtsensor stellt ein Lichtsensorausgangsignal bereit, dass an von der Steuereinheit empfangen wird. Dieses Empfangen kann drahtgebunden oder drahtlos erfolgen. Dieses Empfangen vom Lichtsensor in der Steuereinheit kann permanent erfolgen. Dieses Empfangen vom Lichtsensor in der Steuereinheit kann in vordefinierten Zeitabständen erfolgen.

Der Lichtsensor kann eine Lichtsensorschaltung umfassen. Die Lichtsensorschaltung kann eine erfasste Lichtmenge auswerten und (nur) das Ergebnis der Auswertung an die Steuereinheit senden.

Die Steuereinheit ist dazu eingerichtet, das Lichtsensorausgangssignal des Lichtsensors oder der Lichtsensorschaltung auszuwerten. Die Steuereinheit kann dazu eingerichtet sein, das Lichtsensorausgangssignal zu Zeitpunkten, in denen die Lichtquelle(n) aktiviert sind, zu ignorieren. Die Steuereinheit kann dazu eingerichtet sein, das Lichtsensorausgangssignal zu Zeitpunkten, in denen die Lichtquelle(n) deaktiviert sind, auszuwerten.

Damit erhält die Steuereinheit die Information über die Lichtmenge an Umgebungslicht vom Lichtsensor. Die Steuereinheit steuert, zu welchen Zeitpunkten das Lichtsensorausgangssignal auszuwerten ist.

Damit erhält die Steuereinheit alternativ oder zusätzlich die Information, dass die Lichtmenge an Umgebungslicht größer als ein vordefinierter Schwellwert ist. Diese Information kann von einer Lichtsensorschaltung bereitgestellt sein.

Die Steuereinheit kann definieren, zu welchem Zeitpunkt ein Lichtsensorausgangssignal auszuwerten ist.

Die Steuereinheit deaktiviert die Lichtquellen des Geräts, um das Umgebungslicht mittels des Lichtsensors zu detektieren. Das Detektieren der Umgebungslicht kann durch Auswerten des Lichtsensorausgangssignals mittels der Steuereinheit erfolgen. Das Detektieren der Umgebungslicht kann das Empfangen des (ausgewerteten) Lichtsensorausgangssignal einer Sensorsteuerung in der Steuereinheit umfassen.

Durch das Deaktivieren der Lichtquellen kann ein Störeinfluss von Lichtquelle(n) während des Zeitpunkts des Detektierens der Umgebungslicht mittels des Lichtsensors verhindert/vermieden werden. Die Steuereinheit ist in Kenntnis des Zeitpunkts über die Deaktivierung und kann die Detektion des Umgebungslichts durch Auswertung des Lichtsensorsignals zeitlich abhängig von der Deaktivierung der Lichtquelle(n) durchführen.

Das Umgebungslicht kann mittels des Lichtsensors detektiert werden, nachdem die Lichtquellen deaktiviert wurden.

Durch die Eignung der Steuereinheit, Licht nur bzw. insbesondere zu detektieren, wenn die Lichtquelle(n) im Gehäuse deaktiviert sind, erfolgt eine vorteilhafte Lichtentkopplung des Lichts der Lichtquelle(n) und des Umgebungslichts, so dass zum Zeitpunkt der deaktivierten Lichtquellen der Lichtsensor stets nur das Umgebungslicht in unmittelbarer Nähe des Gehäuses, nicht aber das (vom Gerät selbst) erzeugte Licht detektiert. Die Auswertung des Lichtsensorsignals durch die Steuereinheit erfolgt damit nicht zu Zeitpunkten, zu denen die Lichtquelle(n) aktiviert sind.

Die Steuereinheit kann das Lichtsensorsignal auswerten, indem die Steuereinheit das Lichtsensorsignal mit einem vordefinierten Schwellwert vergleicht. Dazu empfängt die Steuereinheit das Lichtsensorsignal unausgewertet vom Lichtsensor.

Alternativ oder zusätzlich kann eine Lichtsensorsteuerung des Lichtsensors das Lichtsensorsignal auswerten, indem die Lichtsensorsteuerung das Lichtsensorsignal mit einem vordefinierten Schwellwert vergleicht. Das Vergleichsergebnis wird der Steuereinheit bereitgestellt.

Der vordefinierte Schwellwert kann eine maximale Lichtmenge von Umgebungslicht definieren, die nicht überschritten werden darf.

Überschreitet das detektierte Umgebungslicht den vordefinierten Schwellwert, beispielsweise im Gehäuse oder bei Dunkelheit oder wenn das Gerät im Hohlraum einer Außenbereichsvorrichtung montiert ist, so liegt eine Alarmsituation vor. Das Gerät, beispielsweise die Steuereinheit, ist dazu eingerichtet, diese Alarmsituation durch Vergleichen des detektierten Umgebungslichts mit dem vordefinierten Schwellwert zu erkennen. Bei Erkennen der Alarmsituation können Gegenmaßnahmen vom Gerät eingeleitet werden. Beispielsweise wird ein Alarm - als eine Meldung - an die entfernte Netzwerkkomponente weitergegeben. Beispielsweise kann das Löschen einer Speichereinheit durch das Gerät eingeleitet werden, um sensible Daten, wie Netzzugänge, Passwörter, Zertifikate zu löschen.

Die Alarmsituation könnte beispielsweise auch dann verursacht werden, wenn ein Teil des von der/den Lichtquelle(n) erzeugte Licht durch die Gehäusebohrung aus dem Gehäuse heraustritt und zu einem Umgebungslicht addiert würde, beispielsweise bei Dunkelheit oder wenn das Gerät im Hohlraum einer Außenbereichsvorrichtung montiert ist. Würde zeitgleich zu dieser Lichterzeugung das Umgebungslicht am Gehäuse detektiert werden, wäre der Anteil des detektierten Lichts die Summe aus dem Umgebungslicht und dem Anteil des aus dem Gehäuse herausgeleiteten erzeugten Lichts. Diese Summe ist größer als die Menge an Umgebungslicht ohne das erzeugte Licht. Diese Summe kann einen vordefinierten Schwellwert an zulässigem Umgebungslicht am Gehäuse überschreiten und eine Fehlalarmsituation auslösen, auch wenn die Menge an Umgebungslicht (ohne das erzeugte Licht) unterhalb des vordefinierten Schwellwerts an zulässigem Umgebungslicht am Gehäuse wäre. Durch zeitliche Entkopplung von Lichterzeugung und Lichtdetektion durch Deaktivieren der Lichtquelle wird diese Fehlalarmsituation vermieden.

Das Licht ist bevorzugt Licht das für das menschliche Auge wahrnehmbar ist. Das Licht ist das Licht des sichtbaren Bereichs, also ein Anteil von der gesamten elektromagnetischen Strahlung, der für ein menschliches Auge wahrnehmbar ist, insbesondere Licht im Bereich von 380 nm bis 750 nm.

Das Licht kann alternativ oder zusätzlich infrarotes Licht im Bereich von 780 nm bis 1 mm, beispielsweise im Bereich von 900 nm, sein.

Die Lichtquelle ist eine aktive Lichtquelle, beispielsweise eine Leuchtdiode, eine LED, eine OLED, eine Elektrolumineszenz-Folie oder eine licht emittierende Anzeigefläche (Display, Touchdisplay).

Das Gerät kann ein elektronisches Gerät sein. Bevorzugt ist das Gerät eine Energieversorgungskomponente oder eine Netzwerkkomponente.

Das Gerät ist beispielsweise eine aktive Netzwerkkomponente eines Netzwerkes, also ein physisches Gerät, dass für den Datenaustausch (Kommunikation und Interaktion) zwischen einer von dem Gerät entfernten Netzwerkkomponente und dem Gerät vorteilhaft ist. Das Gerät kann beispielsweise ein Gateway, ein Router, eine Netzwerkbrücke, ein Modem, ein drahtloser Zugangspunkt, eine Netzwerkweiche (Switch), ein Netzwerkverteiler (Hub) und /oder ein Repeater sein, oder umfassen. Das Gerät kann zudem eine hybride Netzwerkkomponente, wie eine Mehrschicht-Netzwerkweiche (=Multilayer-Switch), ein Protokollkonverter, ein Brückenrouter, ein Proxy-Server, eine Firewall, ein Netzwerkadressübersetzer, ein Multiplexer, ein Netzwerk-Interface-Controller sein, oder umfassen.

Bevorzugt ist das Gerät eine Netzwerkweiche. Das Netzwerk ist bevorzugt ein Metropolitan Area Network, kurz MAN. Das Netzwerk kann in einer bestimmten Bus-Topologie, beispielsweise als Stern-Bus oder als Serien-Bus (sogenanntes Daisy-Chaining), aufgebaut sein. Bei einer Daisy Chain (engl. ,Gänseblümchenkette') Topologie wird eine Anzahl von Hardware-Komponenten in Serie miteinander als Netzwerk verbunden. Dabei ist ein erstes Gerät direkt mit der entfernten Netzwerkkomponente verbunden. Weitere Geräte sind jeweils mit ihren Vorgängern (Vorgängergeräten) verbunden (Prinzip einer Reihenschaltung). So entsteht eine Kette, die sogenannte Daisy Chain. Das Signal zu und von einem Gerät wird nun über seine Vorgänger bis zur entfernten Netzwerkkomponente, beispielsweise einem Backbone oder einem Server, geleitet.

Alternativ oder zusätzlich ist das Gerät beispielsweise eine Energieversorgungskomponente.

Das Gerät umfasst bevorzugt eine aktive elektrische Komponente. Eine elektrische Komponente unterscheidet sich von passiven elektrischen Komponenten durch das Vorhandensein von Elektronik.

Der Lichtsensor ist beispielsweise außen am Gehäuse befestigt oder integraler Bestandteil des Gehäuses (mechanisch unlösbar/lösbar eingebracht, beispielsweise in eine Kavität eingebracht). Auf diese Weise kann er das Umgebungslicht, das in unmittelbarer Nähe des Gehäuses vorhanden ist, bestmöglich detektieren.

Bevorzugt ist der Lichtsensor im Gehäuse angeordnet, wobei die zumindest eine Gehäusedurchbohrung des Gehäuses zudem eingerichtet ist das Umgebungslicht zu dem Lichtsensor weiterzuleiten. Somit ist das Gerät eingerichtet, das Umgebungslicht, das in unmittelbarer Umgebung des Gehäuses vorhanden ist, auch mit einem Lichtsensor zu detektieren, der im Inneren des Gehäuses angeordnet ist. Somit ist auch der Lichtsensor vor Umwelteinflüssen durch das Gehäuse geschützt.

Für das Weiterleiten von dem Umgebungslicht zu dem Lichtsensor bedarf es in einer einfachen Ausgestaltung keinerlei weiterer Hilfsmittel in/von dem Gehäuse bzw. der Gehäusedurchbohrung. Somit wird einzig anhand von einer Position, einer Größe und einer Form der Gehäusedurchbohrung das Weiterleiten des Umgebungslichts aus dem Gehäuse heraus ermöglicht.

Jede Lichtquelle kann beabstandet von einer Gehäuseinnenwand des Gehäuses angeordnet sein, wobei aufgrund des Abstands das erzeugte Licht in den Lichtsensor (im Gehäuse angeordnet) einkoppelbar ist. Der Abstand verursacht insbesondere, dass ein Anteil des von der/den Lichtquelle(n) erzeugte Licht (Lichtmenge) im Gehäuse verbleibt. Somit verursacht der Abstand, dass das erzeugte Licht nicht zu 100% durch die Gehäusedurchbohrung aus dem Gehäuse herausgeleitet wird. Würde zeitgleich zur Lichterzeugung durch die Lichtquelle(n) des Geräts das Umgebungslicht im Gehäuse detektiert werden, wäre der Anteil des detektierten Lichts die Summe aus dem Umgebungslicht und dem Anteil des im Gehäuse verbleibenden erzeugten Lichts. Diese Summe ist jedenfalls größer als die Menge an Umgebungslicht (ohne diesen Lichtanteil). Diese Summe kann einen vordefinierten Schwellwert an zulässigem Umgebungslicht im Gehäuse überschreiten und eine Fehlalarmsituation auslösen, wenn die Menge an Umgebungslicht unterhalb des vordefinierten Schwellwerts an zulässigem Umgebungslicht im Gehäuse wäre. Durch die zeitliche Entkopplung von Lichterzeugung und Lichtdetektion durch Deaktivieren der Lichtquelle von der Steuereinheit wird diese Fehlalarmsituation vermieden.

Das Gehäuse kann eine Lichtsensor-Durchbohrung als die Gehäusedurchbohrung bzw. als eine der Gehäusedurchbohrungen umfassen. Die Lichtsensor-Durchbohrung ist fluchtend (=auf einer gemeinsamen Geraden befindlich) mit dem im Gehäuse angeordneten Lichtsensor ausgerichtet. Die Lichtsensor-Durchbohrung ist zum Weiterleiten des Umgebungslichts zu dem Lichtsensor eingerichtet. Dabei kann ein Mittelpunkt der Lichtsensor-Durchbohrung mit einem Mittelpunkt einer lichtsensitiven Oberfläche des Lichtsensors fluchtend ausgerichtet sein. Einfallendes Umgebungslicht kann so verlustarm mit dem im Gehäuse befindlichen Lichtsensor detektiert werden.

Das Gerät kann zum Herausleiten/Weiterleiten des erzeugten Lichts aus dem Gehäuse heraus zumindest eine Anzeige-Durchbohrung als die Gehäusebohrung bzw. als eine der Gehäusedurchbohrungen umfassen. Jede Anzeige-Durchbohrung ist fluchtend (=auf einer gemeinsamen Geraden befindlich) mit jeweils einer Lichtquelle ausgerichtet. Dabei kann ein Mittelpunkt der Anzeige-Durchbohrung mit einem Mittelpunkt einer das Licht erzeugenden Oberfläche der entsprechenden Lichtquelle fluchtend ausgerichtet sein. Das erzeugte Licht kann so verlustarm durch das Gehäuse herausgeleitet werden.

Das Gehäuse kann zum Weiterleiten des Umgebungslichts zu dem im Gehäuse befindlichen Lichtsensor eine Lichtsensor-Gehäusedurchbohrung als eine erste Gehäusedurchbohrung umfassen und das Gehäuse kann zum Weiterleiten des erzeugten Lichts aus dem Gehäuse heraus zumindest eine, bevorzugt zwei, mehr bevorzugt vier, mehr bevorzugt acht, mehr bevorzugt zehn Anzeige-Durchbohrungen als zweite Gehäusebohrung(en) umfassen. Jede der Anzeige-Gehäusedurchbohrung ist fluchtend mit jeweils einer Lichtquelle ausgerichtet. Damit sind mehrere Gehäusedurchbohrungen vorgesehen, von der eine Lichtsensor-Gehäusedurchbohrung vorrangig zum Einleiten der Umgebungslicht und getrennt davon zumindest eine Anzeige-Gehäusedurchbohrung zum Herausleiten des erzeugten Lichts vorgesehen ist. Das Einleiten von Umgebungslicht durch eine der Anzeige-Gehäusedurchbohrungen kann den Anteil an Umgebungslichtmenge im Gehäuse in einer vernachlässigbaren Weise erhöhen.

Die Gehäusedurchbohrungen können in einer gemeinsamen Gehäusewand des Gehäuses angeordnet sein. Die Gehäusewand kann ein Gehäusedeckel sein. Die Gehäusewand kann eine Oberseite des Gehäuses sein. Die Gehäusewand kann eine einem Benutzer zugewandte Gehäusewand sein. Die Gehäusewand kann eine Gehäusewand sein, die einer Öffnung einer Außenbereichsvorrichtung zugewandt ist. Aufgrund der zeitlichen Entkopplung von Lichterzeugung und Lichtdetektion ist eine räumliche Nähe von Lichtquelle zu Lichtsensor nunmehr absolut unproblematisch. Auf diese Weise können Lichtsensor und Lichtdetektor im Gerät/Gehäuse mit minimalem Abstand direkt nebeneinander platziert werden. Damit können Platzeinsparungen bewirkt werden und es müssen keine aufwendigen Maßnahmen zur Lichtentkopplung von Lichtquelle und Lichtsensor, beispielsweise durch optische Barrieren und/oder Einhaltung von Mindestdistanzen zwischen Lichtquelle und Lichtsensor im Gehäuse getroffen werden. Das Gehäuse kann dadurch weniger aufwendig und wesentlich kleiner ausgestaltet werden.

Zur Wahrnehmung des erzeugten Lichts ist diese gemeinsame Gehäusewand des Gehäuses einem Benutzer nach Montage des Gehäuses an seinem Bestimmungsort zugewandt.

Im Gehäuse kann eine Leiterplatte angeordnet sein, wobei der Lichtsensor und die zumindest eine Lichtquelle benachbart auf einer der Gehäusedurchbohrung zugewandten Oberseite der Leiterplatte angeordnet sein können. Aufgrund der zeitlichen Entkopplung von Lichterzeugung und Lichtdetektion ist eine räumliche Nähe von Lichtquelle zu Lichtsensor nunmehr absolut unproblematisch. Auf diese Weise können Lichtsensor und Lichtdetektor im Gerät/Gehäuse mit minimalistischem Abstand direkt nebeneinander platziert werden. Damit können Platzeinsparungen bewirkt werden und es müssen keine aufwendigen Maßnahmen zur Lichtentkopplung von Lichtquelle und Lichtsensor auf einer gemeinsamen Leiterplatte, beispielsweise durch optische Barrieren und/oder Einhaltung von Mindestdistanzen zwischen Lichtquelle und Lichtsensor auf der Leiterplatte getroffen werden. Die Leiterplatte kann dadurch weniger aufwendig und kleiner ausgestaltet werden.

Zum Weiterleiten kann im Gehäuse zumindest ein Lichtleitelement angeordnet sein. Ein Lichtleitelement kann zum Einkoppeln des erzeugten Lichts vorgesehen sein. Das Lichtleitelement kann zusätzlich oder alternativ zum Herausleiten des erzeugten Lichts aus dem Gehäuse vorgesehen sein. Das Lichtleitelement kann an oder in die Gehäusebohrung(en) eingebracht sein. Mit dem Lichtleitelement werden Störeinflüsse des erzeugten Lichts weiter minimiert, die Lichtentkopplung zwischen Lichtdetektor und Lichtquelle kann damit nicht nur zeitlich, sondern auch mit baulichen Maßnahmen erfolgen. Das Lichtleitelement ermöglicht beispielsweise eine verbesserte Wahrnehmung des erzeugten Lichts durch einen Benutzer. Das Lichtleitelement kann ein optisch transparentes Material für das erzeugte Licht umfassen. Das Lichtleitelement kann einen Linseneffekt haben, es kann Licht bündeln oder Licht streuen. Das Lichtleitelement kann aus einem transparenten Kunststoffmaterial sein.

Bevorzugt ist ein Lichtleitelement jeweils zwischen zumindest einer, bevorzugt zwei, mehr bevorzugt vier, mehr bevorzugt acht, mehr bevorzugt zehn Anzeige-Durchbohrungen und der entsprechenden Lichtquelle angeordnet. Damit ist in/zwischen jeder Anzeige-Durchbohrung und dem der Anzeige-Durchbohrung eindeutig zugeordneten Lichtquelle genau ein Lichtleitelement vorgesehen. Jedes Lichtleitelement ermöglicht beispielsweise eine verbesserte Wahrnehmung des erzeugten Lichts jeder Lichtquelle für einen Benutzer.

Bevorzugt ist ein Lichtleitelement zwischen einer Lichtsensor-Gehäusedurchbohrung und dem Lichtsensor angeordnet. Ein Lichtleitelement kann zum Einkoppeln des Umgebungslichts für einen im Inneren des Gehäuses angeordneten Lichtsensor vorgesehen sein. Das Lichtleitelement kann in die Gehäusebohrung(en) eingebracht sein. Mit diesem Lichtleitelement werden Störeinflüsse des erzeugten Lichts weiter minimiert, die Lichtentkopplung wird damit nicht nur zeitlich, sondern auch mit baulichen Maßnahmen ermöglicht. Das Lichtleitelement ermöglicht beispielsweise eine verbesserte Einkopplung des Umgebungslichts in das Gehäuse. Das Lichtleitelement kann ein optisch transparentes Material für das erzeugte Licht umfassen. Das Lichtleitelement kann eine Lichtbündelung verursachen, woraufhin der Lichtsensor weniger sensitiv zum Detektieren des Umgebungslichts ausgebildet sein muss. Der Lichtsensor kann so eine geringere Güte aufweisen, die Kosten für das Gerät können gesenkt werden.

Die Steuereinheit kann eine Zeitsteuerung umfassen. Die Zeitsteuerung kann die Steuereinheit zyklisch (=wiederholend) dazu veranlassen, jede Lichtquelle in einem Zeitintervall der Ansteuerung zu deaktivieren, in dem (Zeitintervall) das Umgebungslicht detektiert wird. Somit ist die Steuereinheit zeitgesteuert.

In einem ersten Zeitintervall ist jede Lichtquelle deaktiviert, sodass die Steuereinheit eingerichtet ist, in diesem ersten Zeitintervall zuverlässig das Lichtsensorausgangssignal zu empfangen und auszuwerten. Das in diesem ersten Zeitintervall ausgewertete Lichtsensorausgangssignal hat keine Störeinflüsse von den Lichtquellen.

In einem zweiten (=anderen, vom ersten Zeitintervall verschiedenen, nicht mit dem ersten Zeitintervall überlappenden) Zeitinterfall kann die Steuereinheit die Lichtquelle(n) aktivieren. Das in diesem zweiten Zeitintervall (ggf.) auswertbare Lichtsensorausgangssignal hat Störeinflüsse von den Lichtquellen. Bevorzugt ist die Steuereinheit dazu eingerichtet, das Lichtsensorausgangssignal in diesem zweiten Zeitintervall zu ignorieren.

Das erste Zeitintervall kann unmittelbar an das zweite Zeitintervall angrenzen. Das erste Zeitintervall und das zweite Zeitintervall wechseln sich zyklisch miteinander ab. Das erste Zeitintervall kann kürzer sein als das zweite Zeitintervall. Die Länge des zweiten Zeitintervalls kann ein ganzzahliges Vielfaches einer Länge des ersten Zeitintervalls sein.

Bevorzugt ist zwischen dem ersten Zeitintervall und dem zweiten Zeitintervall eine Totzeit bzw. Setup-Zeit als drittes Zeitintervall angeordnet. Diese Totzeit kann dazu dienen, die Lichtquelle(n) einzuschwingen. Das dritte Zeitintervall kann kürzer sein als das erste Zeitintervall. Die Länge des ersten Zeitintervalls kann ein ganzzahliges Vielfaches der Länge des dritten Zeitintervalls sein.

Bevorzugt ist zwischen dem zweiten Zeitintervall und dem (neuen) ersten Zeitintervall eine Totzeit bzw. Setup-Zeit als viertes Zeitintervall angeordnet. Diese Totzeit kann dazu dienen, den Lichtsensor einzuschwingen. Das vierte Zeitintervall kann kürzer sein als das erste Zeitintervall. Die Länge des ersten Zeitintervalls kann ein ganzzahliges Vielfaches der Länge des dritten Zeitintervalls sein. Die Länge des vierten Zeitintervalls kann gleich der Länge des dritten Zeitintervalls sein.

Die Steuereinheit kann einen Zähler umfassen. Der Zähler (=Zählwerk) ist ein Element der Steuereinheit und eingerichtet, Zeiteinheiten quantitativ zu erfassen. Ein Zählerwert des Zählers kann jeweils nach Ablauf einer vordefinierten Zeiteinheit inkrementiert werden. Eine Zeiteinheit kann ein ganzzahliges Vielfaches einer Taktperiode eines Takts zum Betreiben der Steuereinheit sein.

Eine Zeiteinheit kann alternativ ein Bruchteil einer vorgegebenen Gesamtzeitdauer zum Durchlaufen eines Zyklus bestehend aus erstem Zeitintervall und zweiten Zeitintervall, bevorzugt und dritten Zeitintervall, mehr bevorzugt und viertes Zeitintervall, sein.

Der Zähler kann bei Erreichen eines vordefinierten Zählerhöchstwerts auf den Zählerwert Null zurückgesetzt werden. Der Zählerhöchstwert kann dem Ende des Durchlaufs eines Zyklus bestehend aus erstem Zeitintervall und zweiten Zeitintervall, bevorzugt und dritten Zeitintervall, mehr bevorzugt und viertes Zeitintervall, sein. Mit Erreichen des Zählerhöchstwertes kann der Zyklus beendet sein und ein neuer Zyklus von Null beginnen, weshalb der Zählerwert auf den Wert Null zurückgesetzt werden kann.

Der Zählerhöchstwert kann ein ganzzahliges Vielfaches einer Taktperiode eines Takts zum Betreiben der Steuereinheit sein.

Der Zählerhöchstwert kann alternativ einer vorgegebenen Gesamtzeitdauer zum Durchlaufen eines Zyklus bestehend aus erstem Zeitintervall und zweiten Zeitintervall, bevorzugt und dritten Zeitintervall, mehr bevorzugt und viertes Zeitintervall, entsprechen.

Bei einem vordefinierten ersten Zählerwert können alle Lichtquellen deaktiviert werden, um das Umgebungslicht im Gehäuse zu detektieren. Der vordefinierte erste Zählerwert kann der Zeitdauer des vierten Intervalls (Zählerwert "0" bis erster Zählerwert) entsprechen. Der vordefinierte erste Zählerwert ermöglicht es, den Lichtsensor zu aktivieren und einzuschwingen, bevor ein gültiges Lichtsensorausgangssignal in der Steuereinheit empfangen und ausgewertet wird.

Bei einem vordefinierten zweiten Zählerwert des Zählers, der größer ist als der vordefinierte erste Zählerwert des Zählers, können die Lichtquellen aktiviert bzw. reaktiviert werden. Der vordefinierte zweite Zählerwert kann der Zeitdauer der Summe aus viertem Intervall, erstem Intervall und drittem Intervall entsprechen (Zählerwert "0" bis zweiter Zählerwert) entsprechen. Der vordefinierte zweite Zählerwert ermöglicht es, den Lichtsensor zu deaktivieren und auszuschwingen, bevor die Lichtquelle(n) von der Steuereinheit aktiviert werden.

Zwischen dem ersten Zählerwert und dem zweiten Zählerwert kann ein dritter Zählerwert vorgesehen sein, bei dem der Lichtsensor deaktiviert wird. Zwischen dem ersten Zählerwert und dem dritten Zählerwert können alle Lichtquellen und der Lichtsensor deaktiviert sein (=drittes Zeitintervall). Damit kann zwischen dem Zeitpunkt des Deaktivierens des Lichtsensors und dem Zeitpunkt des Aktivierens der Lichtquelle eine vordefinierte Zeitspanne (=drittes Zeitintervall) vorgesehen sein, um den Lichtsensor auszuschwingen, bevor die Lichtquelle(n) von der Steuereinheit aktiviert werden.

Die Steuereinheit kann weiter dazu eingerichtet sein, ein Alarmsignal zu generieren, wenn das detektierte Umgebungslicht einen vordefinierten Schwellwert überschreitet.

Die Aufgabe wird auch durch ein Verfahren zum Betreiben eines Geräts gemäß der vorhergehend beschriebenen Art gelöst. Das Verfahren läuft zyklisch (=wiederholend) ab und umfasst Verfahrensschritte in folgender Reihenfolge: Deaktivieren aller Lichtquellen im Gehäuse durch eine Steuereinheit des Geräts; Detektieren eines Umgebungslichts mittels Lichtsensor im Gehäuse, nachdem ein erster vordefinierter Zählerwert des Zählers überschritten wurde; Aktivieren der Lichtquellen im Gehäuse, nachdem ein zweiter vordefinierter Zählerwert des Zählers überschritten wurde; und Zurücksetzen des Zählers auf den Zählerwert Null, nachdem ein vordefinierter Zählerhöchstwert überschritten wurde.

Bevorzugt umfasst das Verfahren den Schritt Starten eines Zählers der Steuereinheit durch die Steuereinheit, wobei ein Zählerwert des Zählers pro vordefinierte Zeiteinheit inkrementiert wird, während oder unmittelbar nach dem Deaktivieren-Schritt.

Bevorzugt umfasst das Verfahren den Schritt Senden eines Alarms an eine entfernte Netzwerkkomponente, wenn ein vordefinierter Schwellwert für das Umgebungslicht überschritten wurde.

Die Aufgabe wird zudem durch eine Außenbereichsvorrichtung, insbesondere einen Mast, mit einer Montagehalterung für ein Gerät gemäß der vorhergehenden Art gelöst. Die Außenbereichsvorrichtung weist eine Öffnung zum Einbringen in und/oder zum Herausnehmen des Geräts aus einem Hohlraum der Außenbereichsvorrichtung auf. Es sind mehrere Gehäusedurchbohrungen in einer gemeinsamen Gehäusewand des Gehäuses des Geräts angeordnet. Im montierten Zustand des Geräts ist die Gehäusewand des Gehäuses der Öffnung der Außenbereichsvorrichtung zugewandt.

Die gemeinsame Gehäusewand des Gehäuses kann nach Montage des Geräts in der Außenbereichsvorrichtung an einer der Öffnung am nächstliegenden Oberseite des Gehäuses angeordnet sein. Damit ist das von der/den Lichtquelle(n) erzeugte Licht leicht für einen Benutzer wahrnehmbar, wenn er die Öffnung der Außenbereichsvorrichtung öffnet.

Die Öffnung der Außenbereichsvorrichtung kann lichtdicht verschlossen sein. In dem Fall ist das Umgebungslicht im Inneren des Hohlraums der Außenbereichsvorrichtung, in der sich das Gerät befindet, unterhalb eines vordefinierten Schwellwerts. Bei Öffnung der Außenbereichsvorrichtungsöffnung gelangt mehr Umgebungslicht in unmittelbare Nähe des Geräts. Das kann von dem Lichtsensor detektiert werden. Dieses mehr an Umgebungslicht kann als Manipulationsversuch gewertet werden (insbesondere, wenn die Öffnung dem Gerät nicht angekündigt wurde) und es wird eine Alarmsituation erkannt. Es wird eine Meldung an das Netzwerk durch das Gerät abgegeben.

Die Alarmsituation kann zweistufig gehandhabt werden. In einer ersten Stufe erfolgt (bloß) eine Meldung an das Netzwerk, wenn die Umgebungslichtmenge den vordefinierten Schwellwert überschreitet (bspw. beim Öffnen der Öffnung der Außenbereichsvorrichtung). Wenn eine Wartungsarbeit etc. an der Außenbereichsvorrichtung angekündigt ist, kann die Alarmsituation seitens des Netzwerks beendet werden. Es wird eine Bestätigung an das Gerät gesendet, dass das Öffnen kein Manipulationsversuch oder Angriff ist. Wird binnen einer vorgegebenen Zeit keine Bestätigung im Gerät empfangen - beispielsweise, weil keine Wartungsarbeit etc. an der Außenbereichsvorrichtung angekündigt worden sind oder tatsächlich ein Manipulationsversuch vorliegt, kann in einer zweiten Stufe der Alarmsituation das Gerät eigenständig das Löschen/Sperren des Geräts bzw. eines Speicherinhalts veranlassen (Stichwort: Zeroize).

Die Außenbereichsvorrichtung kann ein Mast sein.

Die Halterung kann eine Bügelhalterung sein. Die Halterung kann mit einer Außenbereichsvorrichtung verbunden werden. Dadurch kann das System mit der Außenbereichsvorrichtung verbunden werden.

Eine Außenbereichsvorrichtung ist bevorzugt eine Vorrichtung, die in einem Außenbereich, wie einem öffentlichen oder privaten Platz einer Stadt oder einer ländlichen Gegend stationär installiert ist. In dem Außenbereich ist diese Außenbereichsvorrichtungen Umwelteinflüssen, wie Wetter, Vandalismus und/oder Unfallszenarien ausgesetzt.

Beispielsweise ist eine Außenbereichsvorrichtung ein Straßenmöbel (auch Stadtmöbel genannt). Ein Straßenmöbel ist ein Oberbegriff für Gegenstände in einem Außenbereich, einem öffentlichen und privaten Raum, auf einem Platz oder in einer Parkanlage. Ein Straßenmöbel bietet eine im öffentlichen Raum benötigte Funktion an oder dient der Information oder Werbung. Beispielsweise zählen Beleuchtungskörper, Lichtzeichenanlagen oder Verkehrszeichen zu Stadtmöbeln.

Beispielsweise ist eine Außenvorrichtung ein Hydrant, ein Telefonverteilkasten, ein Stromversorgungskasten, eine Litfaßsäule, ein Schaltschrank oder eine Taxi-Säule.

Bevorzugt ist eine Außenvorrichtung ein pfeilerartiger Hohlkörper, insbesondere ein Mast. Ein Mast ist hierbei ein Bauwerk mit zumindest einem hohlen pfeiler- bzw. pfostenähnlichen Innenbereich. Die Grundfläche eines Mastes ist im Vergleich zu seiner Höhe gering. Der Mast dient vorrangig zur Befestigung von elektrischen Funktionseinheiten, wie beispielsweise von Beleuchtungsmitteln (Lichtmast für Straßenbeleuchtung, Flutlicht, Wegelicht, Leuchtreklame) und/oder Einheiten zur Überwachung und/oder Leitung eines Verkehrs (Wegweiser, Lichtsignalanlagen, Lichtzeichenanlagen, Verkehrsbeschilderung, Mautbrücken, Verkehrszähler) und/oder anderer elektrischer Komponenten, wie beispielsweise Antennen und/oder Ladestationen.

Die Außenbereichsvorrichtung kann einen Hohlraum aufweisen. Der Hohlraum kann sich über das gesamte Innenvolumen der Außenbereichsvorrichtung erstrecken. Die Außenbereichsvorrichtung kann ein Hohlkörper, beispielsweise in Form eines Hohlzylinders oder eines Hohlkonus oder eines Hohlkegelstumpfes, sein. Alternativ umfasst nur ein Abschnitt der Außenbereichsvorrichtung einen Hohlraum, wodurch der übrige Teil des Außenbereichsvorrichtung als massiver und stabiler Teil verbleibt, so wie es etwa bei einem massiven Pfeiler der Fall ist.

Der Hohlraum kann im Querschnitt rund, oval, dreieckig, viereckig oder mehreckig sein.

Das Gehäuse des Geräts kann Kühlrippen (=Rippen) umfassen. Eine Nut kann zwischen zwei der Kühlrippen ausgebildet sein. E in Befestigungselement in der Nut kann als Halterung dienen.

In dem Gehäuse kann eine aktive elektrische Komponente angeordnet sein.

Das Gehäuse kann ein Metall umfassen oder aus dem Metall bestehen. Bevorzugt umfasst das Gehäuse Aluminium oder es besteht aus Aluminium.

Das Gehäuse kann eine im Wesentlichen rechteckige, dreieckige, kreisförmige oder ovale Grundform aufweisen. Bevorzugt ist die Grundform rechteckig.

Das Gehäuse kann eine erste Gehäusewand, eine zweite Gehäusewand, eine dritte Gehäusewand und eine vierte Gehäusewand aufweisen. Die erste Gehäusewand, die zweite Gehäusewand, die dritte Gehäusewand und die vierte Gehäusewand können einstückig oder monolithisch ausgebildet sein. Alternativ können die erste Gehäusewand, die zweite Gehäusewand, die dritte Gehäusewand und die vierte Gehäusewand mehrteilig ausgestaltet sein. Dabei kann jede der ersten, zweiten, dritten und vierten Gehäusewand einstückig oder monolithisch ausgebildet sein und die erste, zweite, dritte und vierte Gehäusewand können (mechanisch) miteinander verbunden werden, beispielsweise durch eine Verschraubung.

Das Gehäuse des Geräts kann einen ersten Gehäusedeckel umfassen. Das Gehäuse des Geräts kann optional einen zweiten Gehäusedeckel umfassen. Der Gehäusedeckel kann einen oder mehrere Funktionseinheiten-Anschlüsse umfassen. Der Gehäusedeckel kann Netzwerkanschlüsse umfassen.

Der Netzwerkanschlussträger kann eine Öffnung umfassen oder eine Öffnung sein. Durch die Öffnung kann ein Innenraum des Gehäuses (fluidkommunizierend) mit der Umgebung des Gehäusedeckels verbunden sein.

Ein erster Gehäusedeckel kann zwei Anschlüsse, bevorzugt drei Anschlüsse, besonders bevorzugt vier Anschlüsse, umfassen. Höchstens zwei der Anschlüsse können fluchtend an dem ersten Gehäusedeckel angeordnet sein. Mit anderen Worten, die Mittelpunkte von höchstens zwei der Anschlüsse können auf einer (gedachten) Gerade liegen.

Jeder der Anschlüsse kann ein optischer oder elektrischer Anschluss sein. Beispielsweise kann ein optischer Anschluss eine Aufnahme, insbesondere eine Steckeraufnahme, für ein Glasfaserkabel sein. Über den optischen Anschluss kann ein optisches Signal in das Gerät eingebracht werden. Ein elektrischer Anschluss kann eine Aufnahme, insbesondere eine Steckeraufnahme, für ein Datenkabel oder ein Stromkabel sein. Über den elektrischen Anschluss kann ein Datensignal oder ein elektrischer Strom in das Gerät eingebracht werden.

Der erste Gehäusedeckel kann ein erstes Ende, insbesondere ein oberes Ende, des Gehäuses abschließen. Der zweite Gehäusedeckel kann ein zweites Ende, insbesondere ein unteres Ende, des Gehäuses abschließen.

### KURZE BESCHREIBUNG DER FIGUREN

Nachfolgend wird anhand von Figuren die Erfindung bzw. weitere Ausführungsformen und Vorteile der Erfindung näher erläutert, wobei die Figuren lediglich Ausführungsbeispiele der Erfindung beschreiben. Gleiche Bestandteile in den Figuren werden mit gleichen Bezugszeichen versehen.
- Fig. 1: zeigt ein Gerät 100;
- Fig. 2: zeigt das Gerät der Figur 1 in einer Draufsicht (von unten);
- Fig. 3: zeigt das Gerät 100 der Figur 1 in einer Seitenansicht;
- Fig. 4: zeigt das Gerät 100 aus der Figur 3 entlang einer Schnittlinie A-A';
- Fig. 5: zeigt den Bereich B des Geräts 100 aus der Figur 4 vergrößert;
- Fig. 6: zeigt ein Blockschaltbild zur erfindungsgemäßen Ansteuerung der Lichtquellen und des Lichtsensors;
- Fig. 7: zeigt einen erfindungsgemäßen Zeitverlauf zur Ansteuerung von Lichtquelle(n) und Lichtsensor;
- Fig. 8a: zeigt einen erfindungsgemäßen Zeitverlauf zur Ansteuerung von Lichtquelle(n) und Lichtsensor;
- Fig. 8b: zeigt einen Abschnitt des erfindungsgemäßen Zeitverlaufs aus Fig. 8a;
- Fig. 9a: zeigt eine Lichtsensorschaltung 1064 mit Fototransistor;
- Fig. 9b: zeigt eine Lichtsensorschaltung 1064 mit Fotodiode; Fig. 10 zeigt eine Außenbereichsvorrichtung 200 mit montiertem Gerät 100 in einer Seitenansicht; und
- Fig.11: zeigt ein Verfahrensablaufdiagramm eines erfindungsgemäßen Verfahrens 400.

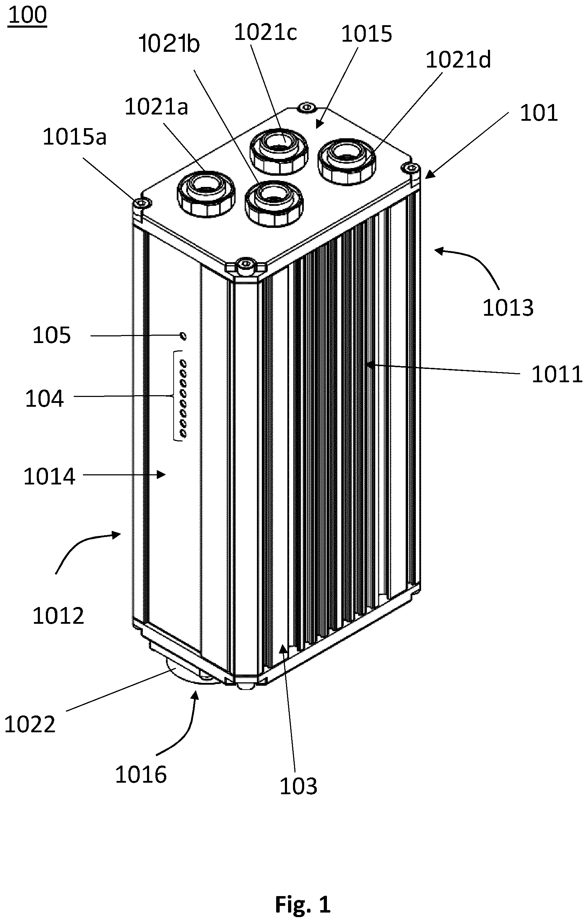

Fig. 1 zeigt ein Gerät 100 in einer perspektivischen Seitenansicht. Das Gerät 100 kann ein Gehäuse 101 umfassen. Das Gehäuse 101 kann eine erste Gehäusewand 1011, eine zweite Gehäusewand 1012 (nicht in Fig. 1 sichtbar), eine dritte Gehäusewand 1013 (nicht in Fig. 1 sichtbar) und eine vierte Gehäusewand 1014 umfassen. Nicht alle Gehäusewände sind notwendig, sondern ein Teil der Gehäusewände kann ausreichend sein.

Die erste Gehäusewand 1011 umfasst mehrere Kühlrippen, in die Befestigungselemente angeordnet sein können (nicht gezeigt in Fig. 1). Bevorzugt ist die erste Gehäusewand 1011 vollständig mit Kühlrippen versehen bzw. in der gesamten ersten Gehäusewand 1011 können Kühlrippen ausgebildet sein.

Die Fläche der ersten Gehäusewand 1011 kann größer sein als die Fläche der dritten Gehäusewand 1013. Alternativ oder zusätzlich kann die Fläche der ersten Gehäusewand 1011 größer sein als die Fläche der vierten Gehäusewand 1014.

Die zweite Gehäusewand 1012 kann analog oder gleich zu der ersten Gehäusewand 1011 ausgestaltet sein. Insbesondere kann die zweite Gehäusewand 1012 mehrere Kühlrippen umfassen.

Die erste Gehäusewand 1011 kann der zweiten Gehäusewand 1012 gegenüberliegen.

Bevorzugt umfasst die dritte Gehäusewand 1013 keine Kühlrippen. Es ist jedoch möglich, dass die dritte Gehäusewand 1013 Kühlrippen umfasst. Die dritte Gehäusewand 1013 kann die erste Gehäusewand 1011 und die zweite Gehäusewand 1012 verbinden.

Die vierte Gehäusewand 1014 umfasst bevorzugt keine Kühlrippen. Jedoch kann auch die vierte Gehäusewand 1014 Kühlrippen umfassen. Die vierte Gehäusewand 1014 kann die erste Gehäusewand 1011 und die zweite Gehäusewand 1012 verbinden. Die vierte Gehäusewand 1014 kann der dritten Gehäusewand 1013 gegenüberliegen.

Die vierte Gehäusewand 1014 kann eine Anzeige 104 umfassen. Die Anzeige 104 kann eine oder mehrere Lichtquellen, insbesondere LEDs, OLEDs. eine oder mehrere Leuchten oder Lampen, ein oder mehrere Displays, insbesondere Touch-Displays, oder einen oder mehrere Schalter umfassen (Lichtquellen selbst sind nicht gezeigt in Fig. 1). Durch die Anzeige 104 kann einem Nutzer eine Information über den Zustand des Geräts 100 vermittelt werden. Beispielsweise wird einem Nutzer durch ein Aufleuchten einer LED signalisiert, dass das Gerät 100 betriebsbereit oder in Betrieb ist. Durch ein Aufleuchten einer anderen LED oder durch ein Aufleuchten der gleichen LED in einer anderen Farbe kann dem Nutzer signalisiert werden, dass das Gerät 100 nicht betriebsbereit oder nicht in Betrieb ist, weil beispielsweise eine Fehlfunktion oder eine Störung vorliegt.

Die vierte Gehäusewand 1014 kann zudem einen Sensor 105 umfassen. Der Sensor 105 kann ein Lichtsensor sein. Der Lichtsensor 105 kann Umgebungslicht erfassen (detektieren). Der Lichtsensor 105 kann ein Lichtsensorausgangssignal bereitstellen, das an eine Steuereinheit (nicht dargestellt in Fig. 1) übertragen wird.

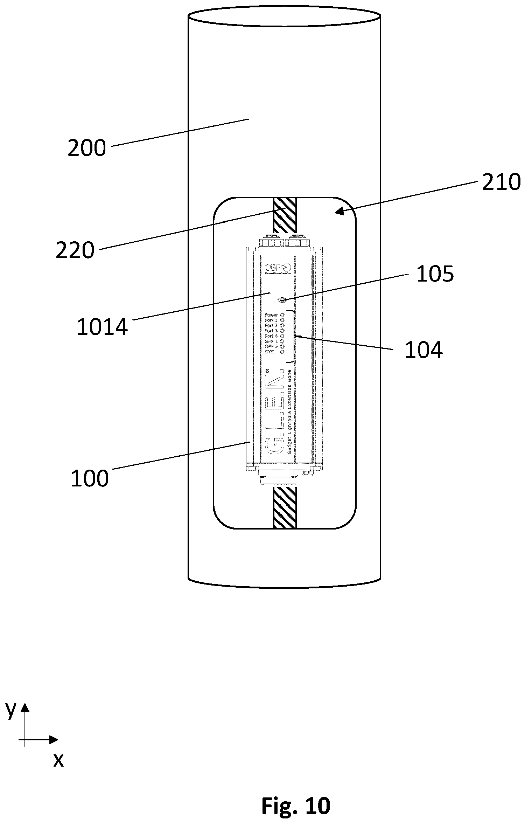

Ist das Gerät 100 mit einer Außenbereichsvorrichtung 200 (sh. Fig. 10) verbunden, kann die vierte Gehäusewand 1014 die dem Nutzer oder der Öffnung 220 der Außenbereichsvorrichtung 200 zugewandte Seite des Geräts 100 sein. Blickt der Nutzer durch die Öffnung 210 der Außenbereichsvorrichtung 200, kann die vierte Gehäusewand 1014 die Seite des Geräts 100 sein, die dem Nutzer zugewandt ist.

Die dritte Gehäusewand 1013 kann dem Nutzer oder der Öffnung der Außenbereichsvorrichtung 20 abgewandt sein, wenn das Gerät 100 mit einer Außenbereichsvorrichtung 20 verbunden ist.

Die erste Gehäusewand 1011 und/oder die zweite Gehäusewand 1012 können Seitenwände des Geräts 100 sein.

Die erste Gehäusewand 1011, die zweite Gehäusewand 1012, die dritte Gehäusewand 1013 und die vierte Gehäusewand 1014 können einstückig oder monolithisch miteinander ausgebildet sein. Alternativ kann einige der ersten, zweiten, dritten und vierten Gehäusewände 1011, 1012, 1013, 1014 oder alle der ersten, zweiten, dritten und vierten Gehäusewände 1011, 1012, 1013, 1014 als einzelne Bauteile ausgebildet sein, die miteinander verbunden sind.

Das Gehäuse 101 des Geräts 100 kann einen ersten Gehäusedeckel 1015 umfassen, der auch als oberer Gehäusedeckel bezeichnet sein kann. Der erste Gehäusedeckel 1015 kann mit der ersten Gehäusewand 1011, der zweiten Gehäusewand 1012, der dritten Gehäusewand 1013 und der vierten Gehäusewand 1014 verbunden sein. Für diese Verbindung sind Gehäusefixierungsbohrungen 1015a am ersten Gehäusedeckel 1015 vorgesehen. Die Verbindung kann beispielsweise durch eine Verschraubung oder durch eine Klemmung erfolgen.

Der erste Gehäusedeckel 1015 kann einen ersten Funktionseinheiten-Anschluss 1021a umfassen. Der erste Gehäusedeckel 1015 kann einen zweiten Funktionseinheiten-Anschluss 1021b umfassen. Der erste Gehäusedeckel 1015 kann einen dritten Funktionseinheiten-Anschluss 1021c umfassen. Der erste Gehäusedeckel 1015 kann einen vierten Funktionseinheiten-Anschluss 1021a umfassen. Bevorzugt umfasst der erste Gehäusedeckel 1015 zumindest zwei, bevorzugt zumindest drei, bevorzugter zumindest vier, Anschlüsse 1021a, 1021b, 1021c, 1021d. Durch jeden Anschluss 1021a-d kann das Gerät 100 mit einer Funktionseinheit (nicht in Fig. 1 dargestellt) verbunden sein. Beispielsweise kann ein Stecker eines Kabels von einem der Anschlüsse 1021a, 1021b, 1021c, 1021d aufgenommen werden oder in einen der Anschlüsse 1021a, 1021b, 1021c, 1021d eingesteckt werden. Dadurch kann eine Datenverbindung zwischen dem Gerät 100 und einem anderen Gerät, beispielsweise mit einer Funktionseinheit (nicht dargestellt in Fig. 1), hergestellt werden. Die Funktionseinheit kann beispielsweise ein Leuchtmittel, eine Verkehrsüberwachungseinheit, eine Kamera, eine Verkehrszähleinheit, eine Mauteinheit, eine KFZ-Ladestation, ein WiFi-Hotspot sein. Einer oder mehrere der Anschlüsse 1021a, 1021b, 1021c, 1021d können eingerichtet sein, elektrische Energie zur Energieversorgung des anderen Geräts, ein elektrisches Signal, ein Datensignal und/oder ein optisches Signal zu empfangen und/oder zu senden, oder in das Gerät 100 einzuleiten.

Einer oder mehrere der Anschlüsse 1021a, 1021b, 1021c, 1021d können eine Öffnung umfassen, durch die ein Innenraum des Geräts 100 mit der Umgebung des Geräts in Fluidkommunikation steht. Einer oder mehrere der Anschlüsse 1021a, 1021b, 1021c, 1021d können verschlossen sein, sodass (über den jeweiligen Anschluss 1021a, 1021b, 1021c, 1021d) keine Fluidkommunikation zwischen dem Innenraum des Geräts 100 und der Umgebung des Geräts 100 erfolgen kann.

Insbesondere umfasst der erste Gehäusedeckel 1015 vier Anschlüsse 1021a, 1021b, 1021c, 1021d. Die vier Anschlüsse 1021a, 1021b, 1021c, 1021d können teilweise versetzt angeordnet sein. Bevorzugt sind höchstens zwei der Anschlüsse 1021 zueinander fluchtend angeordnet. Jeweils zwei der Anschlüsse können zueinander fluchtend angeordnet sein. Dabei kann "fluchtend" in einer von dem ersten Gehäusedeckel 1015 definierten Ebene betrachtet werden.

Das Gehäuse 101 des Geräts 100 kann einen zweiten Gehäusedeckel 1016 umfassen. Der zweite Gehäusedeckel 1016 kann auch als unterer Gehäusedeckel 1016 bezeichnet sein. Der zweite Gehäusedeckel 1016 kann mit der ersten Gehäusewand 1011, der zweiten Gehäusewand 1012, der dritten Gehäusewand 1013 und der vierten Gehäusewand 1014 verbunden sein.

Der zweite Gehäusedeckel 1016 kann einen ersten Netzanschluss 1022a und einen zweiten Netzwerkanschluss 1022b umfassen. Durch jeden der Netzwerkanschlüsse 1022 kann das Gerät 100 mit der Umgebung (=Netzwerk, entfernte Netzwerkkomponente) verbunden sein. Beispielsweise kann ein Stecker eines Kabels von einem der Netzwerkanschlüsse 1022 aufgenommen werden. Dadurch kann eine Datenverbindung zwischen dem Gerät 100 und einem anderen Gerät, beispielsweise mit einem entfernten Server über eine Leitung des Netzwerks, hergestellt werden. Jeder Netzwerkanschluss 1022 kann eingerichtet sein, elektrische Energie zur Energieversorgung des Geräts 100, ein elektrisches Signal, ein Datensignal und/oder ein optisches Signal zu empfangen und/oder zu senden, oder in das Gerät 100 einzuleiten.

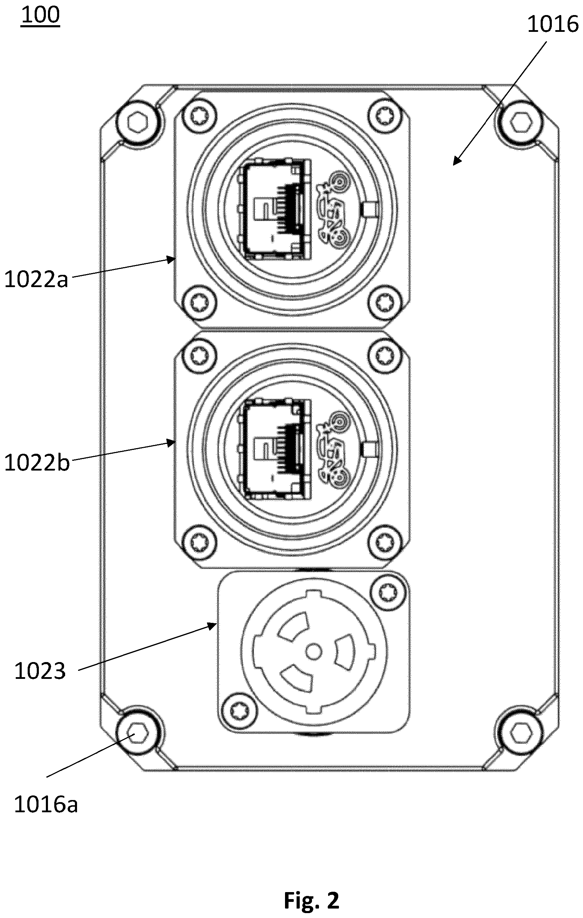

Der Netzwerkanschluss 1022 kann eine Öffnung (in Fig. 2 dargestellt) umfassen, durch die ein Innenraum des Geräts 100 mit der Umgebung des Geräts in Fluidkommunikation steht. Der Netzwerkanschluss 1022 kann verschlossen sein, beispielsweise mittels einer Schutzkappe (nicht dargestellt) oder durch einen Stecker einer Leitung des Netzwerks (nicht dargestellt), sodass (über den Netzwerkanschluss) keine Fluidkommunikation zwischen dem Innenraum des Geräts 100 und der Umgebung des Geräts 100 erfolgen kann.

Fig. 2 zeigt einen Gehäusedeckel 1016 des Geräts 100 in einer Draufsicht von unten. Der Gehäusedeckel 1016 kann der zweite Gehäusedeckel 1016 gemäß Fig. 1 sein. Der Gehäusedeckel 1016 hat eine mechanische Verbindung zu anderen Gehäuseteilen des Gehäuses 101 des Geräts 100, hier durch die Gehäusefixierung 1016a. Dazu sind Schrauben als Fixierelemente in die Gehäusefixierung 1016a, beispielsweise mittels eines Hilfsmittels, insbesondere eines Werkzeugs, wie Schraubendreher etc., mechanisch lösbar eingebracht.

An dem Gehäusedeckel 1016 sind die zwei Netzwerkanschlussträger 1022a und 1022b und der Energieversorgungsanschluss 1023 fixiert angeordnet.

Der Gehäusedeckel 1016 ist zumindest an den Kanten der Oberseite mit einer Deckelfase versehen. Die Deckelfase kann zudem auch an jeder Kante des Gehäusedeckels 1016 vorgesehen sein.

Der Gehäusedeckel 1016 kann eine quaderförmige Grundform haben. Der Gehäusedeckel 1016 kann eine Gehäusedeckelfixierungsbohrung zur Aufnahme einer Gehäusefixierung 1016a umfassen. Die Gehäusedeckelfixierung 1016a kann an jeder Ecke, nur an sich gegenüberliegenden Ecken oder Seiten oder nur an diagonal gegenüberliegenden Ecken des Gehäusedeckels 1016 angeordnet sein. Der Gehäusedeckel 1016 kann vier Gehäusedeckelfixierung 1016a umfassen.

In Fig. 2 sind vier Gehäusedeckelfixierungsbohrungen 1016a am Gehäusedeckel 1016 vorgesehen, jeweils eine Gehäusedeckelfixierung 1016a ist an einer der vier Ecken des Gehäusedeckels 1016 angeordnet. Die Gehäusedeckelfixierung 1016a kann mit je einem Fixierungselement, wie Schraube oder Bolzen oder Stift ausgestattet sein, um den Gehäusedeckel 1016 mit anderen Gehäuseteilen, wie beispielsweise der ersten Gehäusewand 1011, der zweiten Gehäusewand 1012, der dritten Gehäusewand 1013, der vierten Gehäusewand 1014 und/oder dem Gehäusedeckel 1015, mechanisch zu verbinden. Alternativ kann eine Klemmverbindung, eine Rastverbindung oder eine Schraubverbindung vorgesehen sein, um den Gehäusedeckel 1016 mit anderen Gehäuseelementen des Gehäuses 101 des Geräts 100 zu verbinden.

Jede Ecke des Gehäusedeckels 1016 kann eine Deckeleckenstufe (siehe auch Fig. 1) umfassen. Die Stufe kann eine Stufenhöhe (nicht in Fig. 2 dargestellt) umfassen. Die Stufenhöhe ist ein Abstand zwischen einer Oberseite des Gehäusedeckels 1016 und einer Oberseite der Stufe der Deckeleckenstufe. Die Stufenhöhe kann 10%, 20% 25%, 30%, 40%, 50%, 60% oder 70% einer Gehäusedeckeltiefe des Gehäusedeckels 1016 umfassen.

Eine oder mehrere oder alle Deckeleckenstufen können eine halbrunde Ausbuchtung in Höhe der Gehäusefixierung 1016a umfassen, um das Fixierelement verbessert applizieren oder entnehmen zu können.

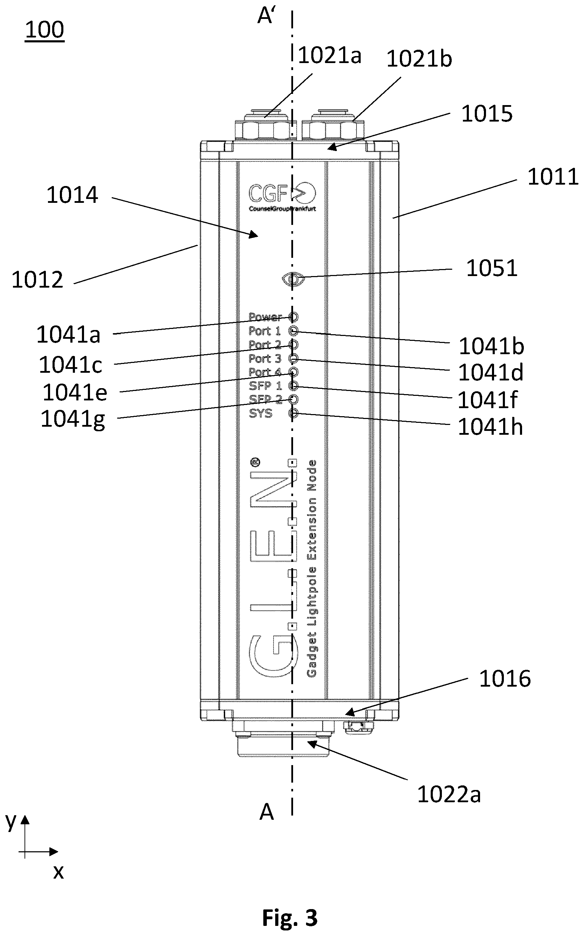

Fig. 3 zeigt das Gerät 100 der Figur 1 in einer Seitenansicht. Auf die Ausführungen von Fig. 1 und Fig. 2 wird Bezug genommen, um unnötige Wiederholungen zu vermeiden. In Fig. 3 dargestellt ist die Gehäusewand 1014 des Gehäuses 101 des Geräts 100, die mit dem ersten Gehäusedeckel 1015 und dem zweiten Gehäusedeckel 1016 und den übrigen Gehäusewänden 1011, 1012 und 1013 mechanisch lösbar verbunden ist.

Am ersten Gehäusedeckel 1015 sind die Funktionseinheitsanschlüsse 1021a und 1021b dargestellt, fluchtend dahinter sind jeweils die Funktionseinheitsanschlüsse 1021c und 1021d angeordnet (nicht dargestellt in Fig. 3).

Am zweiten Gehäusedeckel 1016 ist der erste Netzwerkanschluss 1022a dargestellt, fluchtend dahinter sind jeweils der zweite Netzwerkanschluss 1022b und der Energieversorgungsanschluss 1023.

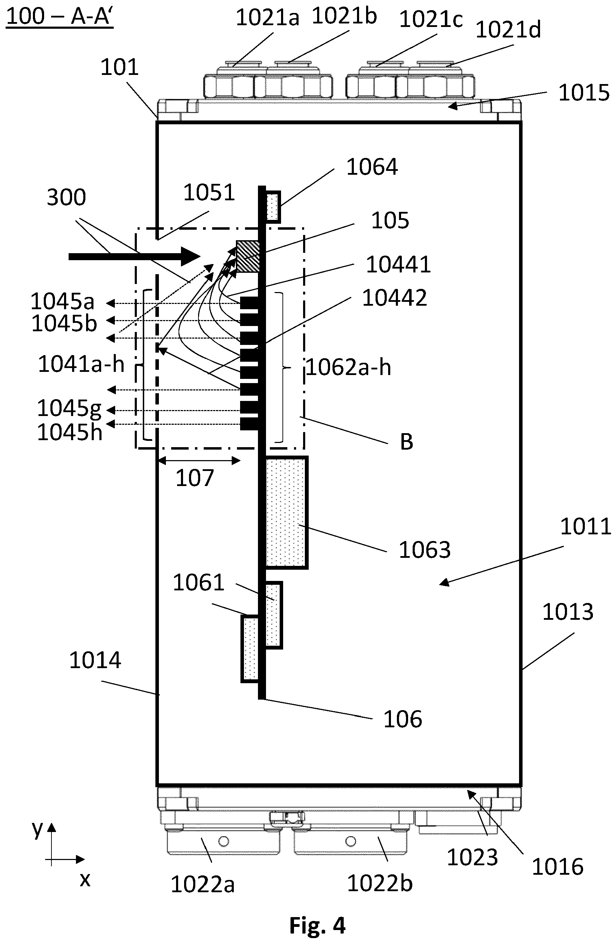

An der Gehäusewand 1014 ist eine Lichtsensor-Gehäusedurchbohrung 1051 dargestellt. Diese Lichtsensor-Gehäusedurchbohrung 1051 leitet Umgebungslicht in das Gehäuse 101, um dort von einem Lichtsensor 105 (siehe Fig. 4) detektiert zu werden. Die Lichtsensor-Gehäusedurchbohrung 1051 ist hier als runde Durchbohrung ausgebildet.

An der Gehäusewand 1014 sind auf einer Geraden darunter Anzeige-Gehäusedurchbohrungen 1041a-h dargestellt. Jede der Anzeige-Gehäusedurchbohrung 1041a-h leitet Licht aus dem Gehäuse 101 heraus. Dieses Licht ist von entsprechenden Lichtquellen 1062a-h (siehe Fig. 4) im Gehäuse 101 erzeugt worden. Jede der Anzeige-Gehäusedurchbohrung 1041a-h ist hier als runde Durchbohrung ausgebildet.

In Fig. 3 sind beispielsweise acht Anzeige-Gehäusedurchbohrungen 1041a-h in die Gehäusewand 1014 eingebracht.

Die erste Anzeige-Gehäusedurchbohrung 1041a ist auf einer Geraden beabstandet von der Lichtsensor-Gehäusedurchbohrung 1051 unter der Lichtsensor-Gehäusedurchbohrung 1051 in die Gehäusewand 1014 eingebracht. Die erste Anzeige-Gehäusedurchbohrung 1041a ist dazu eingerichtet, Licht von einer ersten LED 1062a als Lichtquelle (siehe Fig. 4) aus dem Gehäuse 101 herauszuleiten. Das erzeugte Licht von der ersten LED 1062a ist für einen Benutzer wahrnehmbar. Das erzeugte Licht von der ersten LED 1062a kann einen Status über das Anliegen einer Versorgungsenergie anzeigen, beispielsweise einen Status über das Vorhandensein einer Versorgungsenergie am Energieversorgungsanschluss 1023 (siehe Fig. 2).

Die zweite Anzeige-Gehäusedurchbohrung 1041b ist auf einer Geraden beabstandet von der ersten Anzeige-Gehäusedurchbohrung 1041a unter der ersten Anzeige-Gehäusedurchbohrung 1041a in die Gehäusewand 1014 eingebracht. Die zweite Anzeige-Gehäusedurchbohrung 1041b ist dazu eingerichtet, Licht von einer zweiten LED 1062b als Lichtquelle (siehe Fig. 4) aus dem Gehäuse 101 herauszuleiten. Das erzeugte Licht von der zweiten LED 1062b ist für einen Benutzer wahrnehmbar. Das erzeugte Licht von der zweiten LED 1062b kann einen Status über das Vorhandensein einer Kommunikationsverbindung zwischen Gerät 100 und einer Funktionseinheit anzeigen, beispielsweise den Status über das Vorhandensein einer Kommunikationsverbindung zu einer Funktionseinheit über den ersten Funktionseinheitenanschluss 1021a (siehe Fig. 1).

Die dritte Anzeige-Gehäusedurchbohrung 1041c ist auf einer Geraden beabstandet von der zweiten Anzeige-Gehäusedurchbohrung 1041b unter der zweiten Anzeige-Gehäusedurchbohrung 1041b in die Gehäusewand 1014 eingebracht. Die dritte Anzeige-Gehäusedurchbohrung 1041c ist dazu eingerichtet, Licht von einer dritten LED 1062c als Lichtquelle (siehe Fig. 4) aus dem Gehäuse 101 herauszuleiten. Das erzeugte Licht von der dritten LED 1062c ist für einen Benutzer wahrnehmbar. Das erzeugte Licht von der dritten LED 1062c kann einen Status über das Vorhandensein einer Kommunikationsverbindung zwischen Gerät 100 und einer Funktionseinheit anzeigen, beispielsweise den Status über das Vorhandensein einer Kommunikationsverbindung zu einer Funktionseinheit über den zweiten Funktionseinheitenanschluss 1021b (siehe Fig. 1).

Die vierte Anzeige-Gehäusedurchbohrung 1041d ist auf einer Geraden beabstandet von der dritten Anzeige-Gehäusedurchbohrung 1041c unter der dritten Anzeige-Gehäusedurchbohrung 1041c in die Gehäusewand 1014 eingebracht. Die vierte Anzeige-Gehäusedurchbohrung 1041d ist dazu eingerichtet, Licht von einer vierten LED 1062d als Lichtquelle (siehe Fig. 4) aus dem Gehäuse 101 herauszuleiten. Das erzeugte Licht von der vierten LED 1062d ist für einen Benutzer wahrnehmbar. Das erzeugte Licht von der vierten LED 1062d kann einen Status über das Vorhandensein einer Kommunikationsverbindung zwischen Gerät 100 und einer Funktionseinheit anzeigen, beispielsweise den Status über das Vorhandensein einer Kommunikationsverbindung zu einer Funktionseinheit über den dritten Funktionseinheitenanschluss 1021c (siehe Fig. 1).

Die fünfte Anzeige-Gehäusedurchbohrung 1041e ist auf einer Geraden beabstandet von der vierten Anzeige-Gehäusedurchbohrung 1041d unter der vierten Anzeige-Gehäusedurchbohrung 1041d in die Gehäusewand 1014 eingebracht. Die fünfte Anzeige-Gehäusedurchbohrung 1041e ist dazu eingerichtet, Licht von einer fünften LED 1062e als Lichtquelle (siehe Fig. 4) aus dem Gehäuse 101 herauszuleiten. Das erzeugte Licht von der fünften LED 1062ae ist für einen Benutzer wahrnehmbar. Das erzeugte Licht von der fünften LED 1062e kann einen Status über das Vorhandensein einer Kommunikationsverbindung zwischen Gerät 100 und einer Funktionseinheit anzeigen, beispielsweise den Status über das Vorhandensein einer Kommunikationsverbindung zu einer Funktionseinheit über den vierten Funktionseinheitenanschluss 1021d (siehe Fig. 1).

Die sechste Anzeige-Gehäusedurchbohrung 1041f ist auf einer Geraden beabstandet von der fünften Anzeige-Gehäusedurchbohrung 1041e unter der fünften Anzeige-Gehäusedurchbohrung 1041e in die Gehäusewand 1014 eingebracht. Die sechste Anzeige-Gehäusedurchbohrung 1041f ist dazu eingerichtet, Licht von einer sechsten LED 1062f als Lichtquelle (siehe Fig. 4) aus dem Gehäuse 101 herauszuleiten. Das erzeugte Licht von der sechsten LED 1062f ist für einen Benutzer wahrnehmbar. Das erzeugte Licht von der sechsten LED 1062f kann einen Status über das Vorhandensein einer Kommunikationsverbindung zwischen Gerät 100 und einer entfernten Netzwerkkomponente über ein Netzwerk anzeigen, beispielsweise den Status über das Vorhandensein einer Kommunikationsverbindung zwischen Gerät 100 und einer entfernten Netzwerkkomponente über ein Netzwerk mittels ersten Netzwerkanschluss 1022a anzeigen (siehe Fig. 2).

Die siebte Anzeige-Gehäusedurchbohrung 1041g ist auf einer Geraden beabstandet von der sechsten Anzeige-Gehäusedurchbohrung 1041f unter der sechsten Anzeige-Gehäusedurchbohrung 1041f in die Gehäusewand 1014 eingebracht. Die siebte Anzeige-Gehäusedurchbohrung 1041g ist dazu eingerichtet, Licht von einer siebten LED 1062g als Lichtquelle (siehe Fig. 4) aus dem Gehäuse 101 herauszuleiten. Das erzeugte Licht von der siebten LED 1062f ist für einen Benutzer wahrnehmbar. Das erzeugte Licht von der siebten LED 1062f kann einen Status über das Vorhandensein einer Kommunikationsverbindung zwischen Gerät 100 und einer entfernten Netzwerkkomponente über ein Netzwerk anzeigen, beispielsweise den Status über das Vorhandensein einer Kommunikationsverbindung zwischen Gerät 100 und einer entfernten Netzwerkkomponente über ein Netzwerk mittels zweitem Netzwerkanschluss 1022b anzeigen (siehe Fig. 2).

Die achte Anzeige-Gehäusedurchbohrung 1041h ist auf einer Geraden beabstandet von der siebten Anzeige-Gehäusedurchbohrung 1041g unter der siebten Anzeige-Gehäusedurchbohrung 1041g in die Gehäusewand 1014 eingebracht. Die achte Anzeige-Gehäusedurchbohrung 1041h ist dazu eingerichtet, Licht von einer achten LED 1062h als Lichtquelle (siehe Fig. 4) aus dem Gehäuse 101 herauszuleiten. Das erzeugte Licht von der achten LED 1062h ist für einen Benutzer wahrnehmbar. Das erzeugte Licht von der achten LED 1062h kann einen Status über den Ladezustand einer Software (Firmware) des Geräts 100 anzeigen.

In Fig. 3 sind beispielsweise acht Anzeige-Gehäusedurchbohrungen 1041a-h in die Gehäusewand 1014 eingebracht. Sowohl die Anzahl (hier acht) als auch die Anordnung (auf einer lotrechten Geraden von Gehäusedeckel 1015 zu Gehäusedeckel 1016) der Anzeige-Gehäusedurchbohrungen 1041a-h kann variieren.

Beispielsweise können weitere Anzeige-Gehäusedurchbohrungen (nicht dargestellt in Fig. 3) vorgesehen sein, um das erzeugte Licht weiterer LED (nicht dargestellt in Figs. 3 oder 4) aus dem Gehäuse 101 herauszuleiten.

Beispielsweise können die Anzeige-Gehäusedurchbohrungen 1041a-h in mehreren lotrechten Geraden von Gehäusedeckel 1015 zu Gehäusedeckel 1016 untereinander angeordnet sein.

Beispielsweise können die Anzeige-Gehäusedurchbohrungen 1041a-h in einer waagerechten Geraden von Gehäusewand 1012 zu Gehäusewand 1011 nebeneinander angeordnet sein.

Beispielsweise können die Anzeige-Gehäusedurchbohrungen 1041a-h in mehreren waagerechten Geraden von Gehäusewand 1012 zu Gehäusewand 1011 nebeneinander angeordnet sein.

Fig. 4 zeigt das Gerät 100 aus der Figur 3 entlang einer Schnittlinie A-A' der Fig. 3. Auf die Ausführungen von Fig. 1 bis Fig. 3 wird explizit Bezug genommen, um unnötige Wiederholungen zu vermeiden. In Fig. 4 ist die Gehäusewand 1014 des Gehäuses 101 des Geräts 100 mit dem ersten Gehäusedeckel 1015, mit dem zweiten Gehäusedeckel 1016 und mit den Gehäusewänden 1011, 1012 und 1013 mechanisch lösbar verbunden.

In Fig. 4 sind Elemente des Inneren des Gehäuses 101 angedeutet. Im Inneren des Gehäuses 101 kann sich eine Leiterplatine 106 befinden. Das Gerät 100 kann mehrere Leiterplatinen 106 umfassen. Die Leiterplatine(n) 106 kann (können) mehrteilig sein. Die Leiterplatine 106 kann mit einer anderen Leiterplatine (nicht gezeigt in Fig. 4) mechanisch und elektrisch verbunden sein.

Das Innere des Geräts 100 kann hohl sein. Das Innere des Geräts 100 kann Vorsprünge (nicht gezeigt in Fig. 4) an den Innenseiten des Gehäuses 101 aufweisen, die mit Bauelementen der Leiterplatine 106 physisch kontaktiert sind. Diese Vorsprünge können aus einem Material sein, dass eine Wärme des physisch kontaktierten Bauelements an die Umgebung außerhalb des Gehäuses 101 abführen kann. Dazu können Kühlrippen am Gehäuse vorgesehen sein.

Auf der Leiterplatte 106 kann zumindest eine Lichtquelle, nachfolgend kurz LED, 1062 angeordnet sein. Die zumindest eine LED 1062 kann auf einer Seite der Leiterplatte 106 angeordnet sein, die der vierten Gehäusewand 1014 zugewandt ist. Die LED 1062 erzeugt Licht im sichtbaren Bereich, das von einem Benutzer wahrnehmbar ist.

In Fig. 4 sind LED 1062a-h auf der der vierten Gehäusewand 1014 zugewandten Oberseite der Leiterplatte 106 angeordnet. Jede LED 1062a-h ist dabei fluchtend mit einer der acht Anzeige-Gehäusedurchbohrungen 1042a-h angeordnet. Der Mittelpunkt einer Anzeige-Gehäusedurchbohrung 1042a-h kann sich zusammen mit einem Mittelpunkt einer licht erzeugenden Oberfläche der dazugehörigen LED 1062a-h auf einer Gerade befinden. Die Gerade kann im montierten Zustand des Geräts 100 waagerecht sein.

Die gedachte Gerade kann in einem Winkel von 5°, 10°, 15°, 20°, 25°, 30°, 35°, 40° oder 45° in Bezug zu einer waagerechten Geraden im montierten Zustand des Geräts 100 angeordnet sein. Damit kann das von der LED 1041a-h erzeugte Licht vom Benutzer verbessert wahrgenommen werden, wenn das Gerät 100 wesentlich niedriger als die Augenhöhe des Benutzers (knieend oder stehend) montiert ist.

In Fig. 4 sind insgesamt acht LED 1062a-h gezeigt, die die in Fig. 3 beschriebene Anzeigefunktion erfüllen.

Jede LED 1062a-h kann permanent Licht einer konstanten Lichtmenge erzeugen (Dauerlicht). Jede LED 1062a-h kann alternativ oder zusätzlich Licht einer unregelmäßigen Lichtmenge erzeugen (Blinklicht, Flackerlicht). Das Blinklicht kann dabei moduliert sein.

Zudem ist ein Lichtsensor 105 auf der der vierten Gehäusewand 1014 zugewandten Oberseite der Leiterplatte 106 angeordnet.

Der Lichtsensor 105 ist dabei fluchtend mit einer Lichtsensor-Gehäusedurchbohrungen 1051 angeordnet. Der Mittelpunkt der Lichtsensor-Gehäusedurchbohrung 1051 kann sich zusammen mit einem Mittelpunkt einer licht empfindlichen Oberfläche des Lichtsensors 105 auf einer Gerade befinden.

Die Gerade kann im montierten Zustand des Geräts 100 waagerecht sein.

Die gedachte Gerade kann in einem Winkel von 5°, 10°, 15°, 20°, 25°, 30°, 35°, 40° oder 45° in Bezug zu einer waagerechten Geraden im montierten Zustand des Geräts 100 angeordnet sein. Damit kann das Umgebungslicht 300 vom Lichtsensor 105 verbessert wahrgenommen werden, wenn das Gerät 100 wesentlich niedriger als eine Öffnung der Außenbereichsvorrichtung (nicht gezeigt in Fig. 4) montiert ist.

Der Lichtsensor 105 kann ein "Ambient Light Sensor" sein. Der Lichtsensor 105 kann hauptsächlich Licht im sichtbaren Bereich (für das menschliche Auge wahrnehmbar) erfassen. Der Lichtsensor 105 kann Licht im Infrarotbereich, beispielsweise um 900 nm erfassen. Somit könnte eine Manipulation am Gerät 100 mittels Nachtsichtgerät und Infrarotbeleuchtung wirksam erkannt werden.

Der Lichtsensor 105 ist bevorzugt auf der gleichen Oberseite der Leiterplatte 106 wie die LED 1062a-h angeordnet. Zwischen dem Lichtsensor 105 und der LED 1062a-h sind keine optischen Barrieren zur Lichtentkopplung vorgesehen. Lichtsensor 105 und LED 1062a-h können direkt benachbart nebeneinander angeordnet sein.

Die LED 1062a-h können in einem Abstand 107 von der Gehäuseinnenwand des Gehäuses 101 des Geräts 100 angeordnet sein. Der Abstand 107 kann baulich bedingt sein. Der Abstand 107 kann wenige Millimeter bis einige Zentimeter betragen. Der Abstand 107 kann beispielsweise 1 mm, 2 mm, 5 mm, 10 mm, 11 mm, 12 mm, 15 mm betragen.

Das erzeugte Licht der LED 1062a-h wird in einem Anteil als Anzeigelicht 1045a-h durch die jeweilige Anzeige-Gehäusedurchbohrung 1041a-h aus dem Gehäuse herausgeleitet. Das erzeugte Licht der LED 1062a-h wird zu einem Anteil als Streulicht 1044a-h im Gehäuse verbleiben. Der Anteil von Streulicht 1044 kann wesentlich geringer sein als der Anteil von Anzeigelicht 1045a-h pro LED 1062a-h. Der Anteil an Streulicht 1044 kann 5%, 10%, 15%, 20% oder 25% vom erzeugten Licht einer LED 1062a-h betragen.

Das Streulicht 1044a-h kann im Gehäuse 101 verbleiben. Das Streulicht 1044a-h kann aufgrund baulicher Eigenschaften der LED 1062a-h erzeugt werden. Das Streulicht 1044a-h kann aufgrund des Abstands 107 erzeugt werden. Das Streulicht 1044a-h kann aufgrund nicht-idealer Abstrahlcharakteristik der LED 1062a-h erzeugt werden. Der Streulichtanteil 1044a-h kann bei jeder LED 1062a-h aufgrund Austrittswinkel und gleichem Abstand 107 gleich sein.

Das Streulicht 1044a-h jeder LED 1041a-h ist vom Lichtsensor 105 erfassbar. Das vom Lichtsensor 105 erfassbare Streulicht 1044a-h kann direktes Streulicht 10441a-h sein, also von einer LED 1062a-h erzeugtes Licht, dass direkt auf den Lichtsensor 105 strahlen kann. Das direkte Streulicht 10441a-h kann vorrangig von unmittelbar zum Lichtsensor 105 benachbarten LED 1062a-d erzeugt werden. Das vom Lichtsensor 105 erfassbare Streulicht 1044a-h kann indirektes Streulicht 10442a-h sein, also von einer LED 1062a-h erzeugtes Licht, dass nur indirekt auf den Lichtsensor 105 strahlen kann. Das indirekte Streulicht 10442a-h kann an einer Gehäuseinnenwand reflektiert werden, um auf den Lichtsensor 105 zu strahlen. Das indirekte Streulicht 10442a-h kann vorrangig von entfernt zum Lichtsensor 105 angeordneten LED 1062e-h erzeugt werden. Eine Reflektion an einer Gehäuseinnenwand kann aufgrund von Materialeigenschaften des Gehäuses 101 begünstigt sein. Beispielsweise ist das Gehäuse aus einem hellen Metall, wie Aluminium etc. und ggf. noch zusätzlich beschichtet, beispielsweise eloxiertes Aluminium, sein.

Das Streulicht 1044a-h ist ein Störeinfluss bei der Erfassung des Umgebungslichts 300 durch einen Lichtsensor 105. Werden die Gehäuse-Durchbohrungen 1051 und 1041a-h - wie in Fig. 1, 3 und 4 beschrieben und gezeigt - so angeordnet, kann es zu Fehlalarmierungen kommen, wenn das Streulicht 1044a-h vom Lichtsensor 105 erfasst wird.

Eine aktivierte LED 1062a-h kann beispielsweise 40 Lumen an Lichtstrom abgeben. Bei acht aktivierten LED 1062a-h sind dann 320 Lumen Lichtstrom erzeugt. Ein Lichtsensor 105 hat beispielsweise bei nur 5 % des erzeugten Lichts (16 Lumen Lichtstrom) bereits eine Aktivierungsschwelle und würde - ohne das Vorhandensein von Umgebungslicht 300 bereits eine Alarmsituation erkennen.

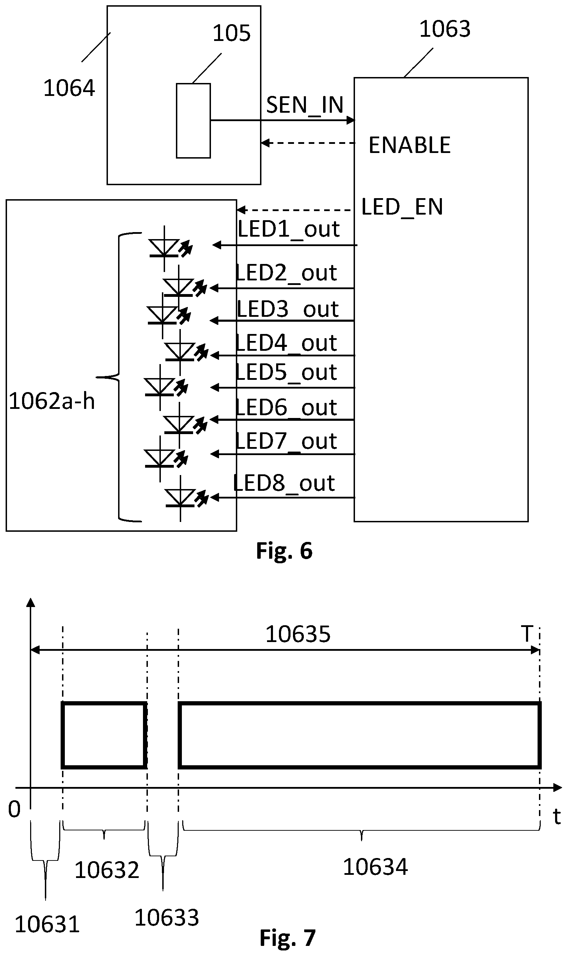

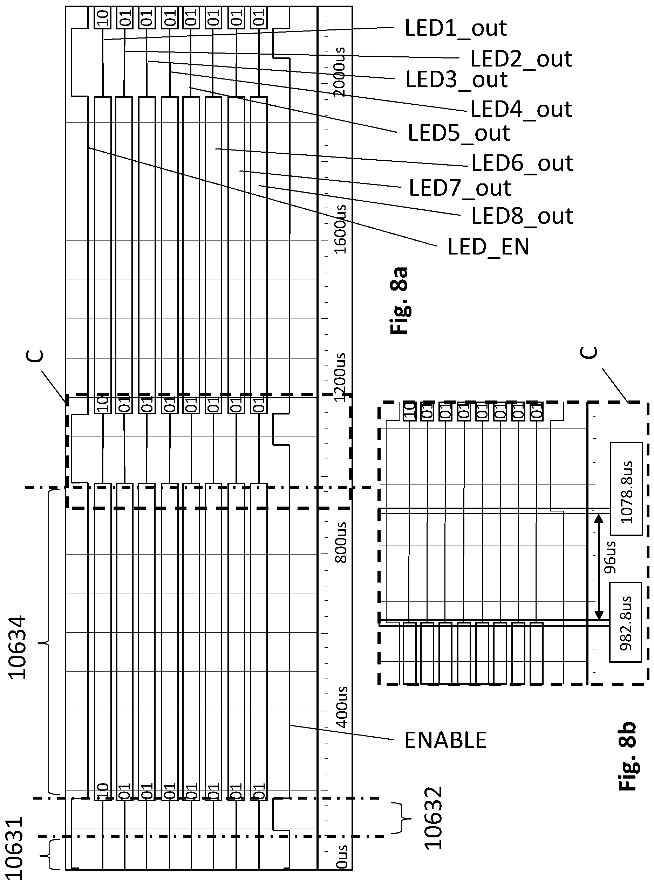

Auf der Platine 106 ist eine Steuereinheit 1063 des Geräts 100 angeordnet. Die Steuereinheit 1063 kann ein Mikrokontroller, ein Mikroprozessor, ein Signalprozessor, ein ASIC oder ein FPGA sein. Diese Steuereinheit ist mit den LED 1062a-h und auch mit dem Lichtsensor 105 elektrisch leitend verbunden, siehe dazu auch Fig. 6. Die Steuereinheit 1063 ist dazu eingerichtet, jede LED 1062a-h des Geräts 100 zu deaktivieren, um das Umgebungslicht 300 mittels des Lichtsensors 105 zu detektieren. Eine zeitliche Ansteuerung ist in Fig. 7 und Fig. 8a-b dargestellt.

Durch diese Ansteuerung der LED 1062a-h derart, dass die LED 1062a-h deaktiviert sind, wenn der Lichtsensor 105 das Umgebungslicht 300 detektieren/erfassen soll und/oder die Auswertung eines Lichtsensorausgangssignals des Lichtsensors 105 nur erfasst wird, wenn die LED 1062a-h von der Steuereinheit 1063 deaktiviert sind, ermöglicht es, dass kein Streulicht 1044 bei der Detektion/Auswertung berücksichtigt wird.

In einer bevorzugten Ansteuerung erfasst der Lichtsensor 105 das Umgebungslicht 300, wenn die LED 1062a-h von der Steuereinheit 1063 deaktiviert sind. Sind die LED 1062a-h von der Steuereinheit aktiviert, so wird das Umgebungslicht 300 nicht vom Lichtsensor 105 erfasst. Damit wird der Lichtsensor 105 deaktiviert und kann kein Umgebungslicht 300 erfassen, wenn die LED 1062a-h aktiviert sind. Entsprechend kann in diesem Zeitintervall keine Alarmsituation erkannt werden.

Alternativ oder zusätzlich kann die Steuereinheit 1063 eingerichtet sein, die LED 1062a-h zu aktivieren und gleichzeitig der Lichtsensor 105 von der Steuereinheit 105 betrieben werden, um das Umgebungslicht 300 zu erfassen - allerdings wird dieses erfasste Umgebungslicht 300 nicht von der Steuereinheit 1063 ausgewertet. Damit wird der Lichtsensor 105 dauerhaft durch die Steuereinheit 1063 betrieben und der Lichtsensor 105 erfasst das Umgebungslicht 300 (auch wenn die LED 1062a-h aktiviert sind). Allerdings erfolgt in diesem Zeitintervall keine Auswertung des Lichtsensorausgangssignals durch die Steuereinheit 1063, sodass auch in dieser Ausgestaltung in diesem Zeitintervall keine Alarmsituation erkannt wird.

Der Lichtsensor 105 ist vorgesehen, die Lichtmenge von Umgebungslicht 300, das unmittelbar in der Umgebung des Geräts 100 vorhanden ist, zu erfassen. Dieses Umgebungslicht 300 wird durch die Lichtsensor-Gehäusedurchbohrung 1051 in das Gehäuse 101 eingeleitet.

Das Umgebungslicht 300 sollte einen vordefinierten Schwellwert nicht übersteigen. Beispielsweise sollte das Umgebungslicht den vordefinierten Schwellwert von 1 Lumen, 2 Lumen, 5 Lumen, 10 Lumen oder 20 Lumen Lichtstrom pro Zeiteinheit (bspw. 1 Sekunde, 1 Millisekunde, 1 Mikrosekunde etc.). nicht überschreiten.

Üblicherweise ist das Gerät 100 in einer lichtdichten Außenbereichsvorrichtung 200 (siehe Fig. 10) eingebracht. Damit liegt die Lichtmenge des Umgebungslichts 300 im manipulationsfreien Betrieb stets unterhalb des vordefinierten Schwellwerts. Wenn ein Angreifer die Außenbereichsvorrichtung öffnet, wird die Lichtmenge des Umgebungslichts 300 den vordefinierte Schwellwert übersteigen. Dieses Umgebungslicht 300 wird vom Lichtsensor 105 erfasst und von der Steuereinheit 1063 ausgewertet. Durch Überschreiten des Schwellwerts wird eine Alarmsituation erkannt und eine entfernte Netzwerkkomponente (nicht dargestellt) kann alarmiert werden (Meldung der hohen Umgebungslichtmenge).

Auf dieser Leiterplatine 106 können weitere elektronische und elektrische Bauelemente 1061 platziert sein, die die Funktion des Geräts 100 beeinflussen oder ermöglichen. Diese Bauelemente 1061 können aktive Bauelemente (Halbleiterchips, Transistoren, Spannungsversorgung, Netzwerkmodule etc.) oder passive Bauelemente (Widerstand, Spule, Kondensator, Steckanschlüsse, etc.) sein. Die Bauelemente 1061 können auf (nur) einer Seite der Leiterplatte 106 oder - wie in Fig. 4 gezeigt - auf beiden Seiten der Leiterplatte 106 angeordnet sein.

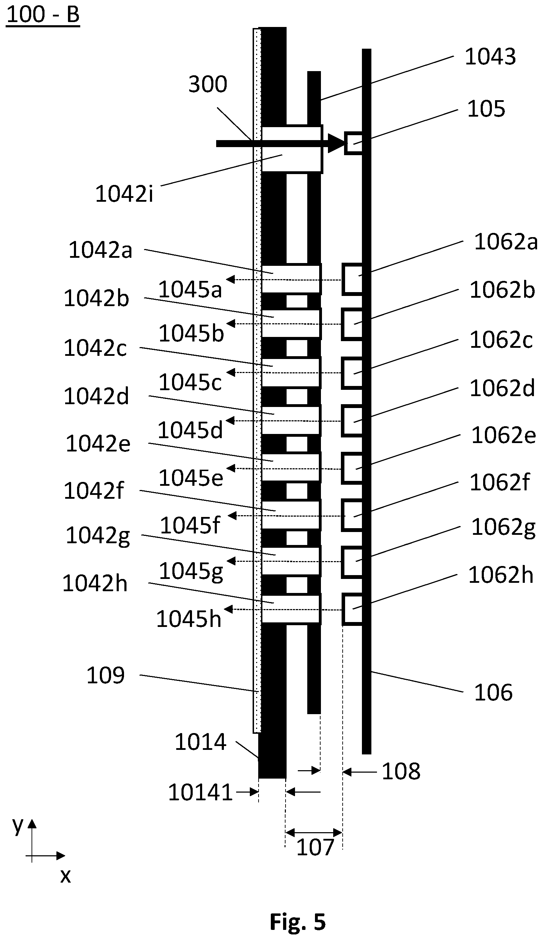

In Fig. 5 ist ein Bereich B aus der Fig. 4 vergrößert dargestellt. Fig. 5 stellt zudem eine Weiterbildung des Geräts 100 der Fig. 4 dar. Auf die Ausführungen zu den vorhergehenden Figuren 1 bis 4 wird explizit verwiesen, um unnötige Wiederholungen zu vermeiden.

In Fig. 5 ist zwischen jeder LED 1062a-h und der entsprechenden Anzeige-Durchbohrungen 1041a-h ein Lichtleitelement 1042a-h angeordnet. Jedes Lichtleitelement 1042a-h kann den Anteil des erzeugten Lichts der LED 1062a-h, der aus dem Gehäuse 101 herausgeführt wird, erhöhen (im Vergleich zu einem nichtvorhandenen Lichtleitelement). Jedes Lichtleitelement 1042a-h kann ein transparentes Material umfassen. Das Material ist insbesondere transparent für das Licht der LED 1062a-h. Das Lichtleitelement 1042a-h kann ein transparenter Kunststofflichtleiter sein.

In Fig. 5 ist zwischen dem Lichtsensor 105 und der Lichtsensor-Durchbohrung 1051 ein Lichtleitelement 1042i angeordnet. Das Lichtleitelement 1042i kann den Anteil des Umgebungslichts 300, das in das Gehäuse eingeleitet wird, erhöhen (im Vergleich zu einem nichtvorhandenen Lichtleitelement 1042i). Das Lichtleitelement 1042i kann ein transparentes Material umfassen. Das Material ist insbesondere transparent für das Umgebungslicht 300. Das Lichtleitelement 1042i kann ein transparenter Kunststofflichtleiter sein.

Das Lichtleitelement 1042a-h kann direkt auf der LED 1062a-h aufgesetzt sein (direkter Kontakt), um eine Lichteinkopplung von der LED 1062a-h in das Lichtleitelement 1042a-h zu verbessern. Das Lichtleitelement 1042a-h kann mit einem Abstand 108 von der LED 1062a-h angeordnet sein, um eine Montage des Geräts 100 zu vereinfachen. Der Abstand 108 beträgt bevorzugt weniger als 0,5mm.

Das Lichtleitelement 1042i kann direkt auf den Lichtsensor 105 aufgesetzt sein (direkter Kontakt), um eine Lichteinkopplung zum Lichtsensor 105 vom Lichtleitelement 1042i zu verbessern. Das Lichtleitelement 1042i kann mit einem Abstand 108 von dem Lichtsensor 105 angeordnet sein, um eine Montage des Geräts 100 zu vereinfachen. Der Abstand 108 beträgt bevorzugt weniger als 0,5mm.

Jedes Lichtleitelement 1042a-i kann auf einem Lichtleitelementeträger 1043 angeordnet sein. Jedes Lichtleitelement 1042a-i kann in der entsprechende Gehäusedurchbohrung 1042a-h und 1051 angeordnet sein. Eine Gehäusewandtiefe 10141 der Gehäusedurchbohrung 1042a-h und 1051 kann vollständig mit einem Lichtleitelement 1042a-i ausgefüllt sein. Jedes Lichtleitelement 1042a-i kann aus einer Gehäuseaußenseite des Gehäuse 101 hervortreten. Das Hervortreten kann einen Linseneffekt bewirken, der einen Lichtstrahl des Anzeigelichts 1045a-h einer LED 1062a-h aufweitet, um die Wahrnehmung des erzeugten Lichts zu verbessern. Das Hervortreten kann einen Linseneffekt bewirken, der einen Lichtstrahl des Anzeigelichts 1045a-h einer LED 1062a-h bündelt, um die Wahrnehmung des erzeugten Lichts zu verbessern.

Ein Abstand 108 zwischen Lichtleitelementeträger 1043 und LED 1062a-h kann kleiner sein als ein Abstand zwischen LED 1062a-h und Gehäuseinnenseite der vierten Gehäusewand 1014. Der geringere Abstand 108 verringert den Anteil des Streulichts 1044 der LED 1062a-h und verringert so Fehlalarmierungen weiter.

Das Umgebungslicht 300 sollte einen vordefinierten Schwellwert nicht übersteigen. Durch das Anordnen von Lichtleitelementen 1042a-i kann dieser vordefinierte Schwellwert erhöht werden. Beispielsweise sollte das Umgebungslicht 300 bei Verwendung von Lichtleitelementen den vordefinierten Schwellwert von 10 Lumen, 20 Lumen, 25 Lumen, 30 Lumen oder 35 Lumen Lichtstrom pro Zeiteinheit (bspw. 1 Sekunde, 1 Millisekunde, 1 Mikrosekunde etc). nicht überschreiten. Damit kann die Erfassung des Umgebungslichts 300 durch den Lichtsensor 105 verbessert werden.

Auf einer Gehäuseaußenseite kann eine Folie 109 aufgebracht sein. Auf einer Gehäuseinnenseite kann auch diese Folie aufgebracht sein (nicht gezeigt in Fig. 5). Die Folie 109 kann eine Dekorfolie sein. Diese Dekorfolie kann eine Dicke von 0,5 mm, 0,75 mm, 1 mm, 1,1 mm oder 1,5 mm betragen. Auf die LED ist (mit 0,5mm Toleranz) ein transparenter Kunststofflichtleiter aufgesetzt. Dieser transportiert das abgestrahlte Licht minus seitlich abgehendes Streulicht auf die Außenseite des Gehäuses. Diese Außenseite liegt unter einer 1,1mm starken Dekorfolie, die im inneren Aufbau ebenfalls diffuse Schichten aufweist. Das im Inneren abgestrahlte Licht hat den weitaus größten Einfluss auf den Störfall.

Fig. 6 zeigt ein Blockschaltbild zur erfindungsgemäßen Ansteuerung der LED 1062a-h und des Lichtsensors 105. Dieses Blockschaltbild der Fig. 6 kann auf der Leiterplatte 106 im Gehäuse 101 realisiert sein. Fig. 7 zeigt einen erfindungsgemäßen Zeitverlauf zur Ansteuerung der LED 1062a-h und des Lichtsensors 105. Die Figuren 6 und 7 werden nachfolgend gemeinsam beschrieben.

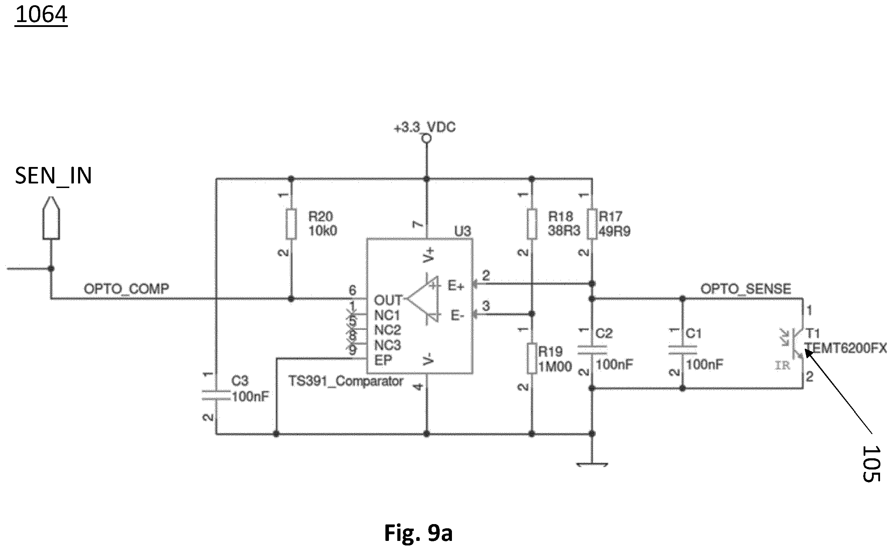

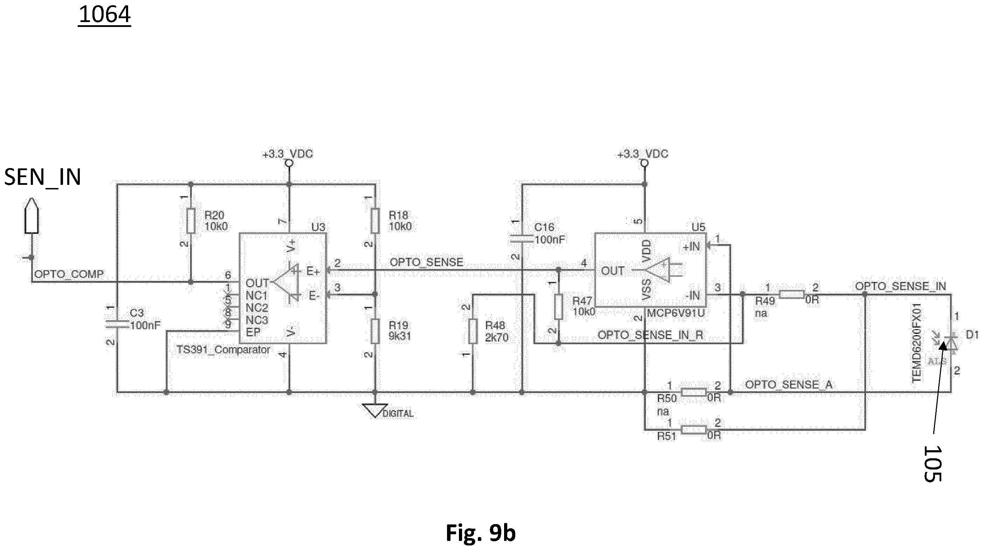

Der Lichtsensor 105 kann dabei Teil einer Lichtsensorschaltung 1064 sein. Beispielhafte Lichtsensorschaltungen 1064 sind in Fig. 9a und Fig. 9b gezeigt und es wird auf die Ausführungen dort verwiesen. Der Lichtsensor 105 bzw. die Lichtsensorschaltung 1064 erzeugen ein Lichtsensorausgangssignal SEN_IN, das von der Steuereinheit 1063 drahtgebunden oder drahtlos empfangen werden kann.

Das Lichtsensorausgangssignal SEN_IN kann permanent vom Lichtsensor 105 generiert werden.

Bevorzugt ist die Steuereinheit 1063 dazu eingerichtet, das Lichtsensorsignals SEN_IN außerhalb des zweiten Intervalls 10632 zu ignorieren. Dabei wird die Auswertung des SEN_IN Signals außerhalb des zweiten Intervalls 10632 unterbrochen.

Alternativ oder zusätzlich ist die Steuereinheit 1063 dazu eingerichtet, die Lichtsensorschaltung 1064 zu deaktivieren. Dazu kann ein Aktivierungs-/Deaktivierungssignal ENABLE von der Steuereinheit 1063 generiert werden und an die Schaltung 1064 geleitet werden. Mit dem Aktivierungs-/Deaktivierungssignal ENABLE kann die Steuereinheit 1063 die Schaltung 1064 zeitweise deaktivieren.

Jede LED 1062a-h kann von der Steuereinheit 1063 ein LED-Signal LED_OUT empfangen. Jedes LED-Signal LED_OUT kann eine Versorgungsspannung für diejenige LED 1062a-h sein, um die jeweilige LED 1062a-h zum Zweck des Aktivierens eine Versorgungsspannung bereitzustellen oder zum Zweck des Deaktivierens keine Versorgungsspannung bereitzustellen. Alternativ kann jedes LED-Signal LED_OUT an einen Steuereingang einer LED-Steuerung (nicht dargestellt in Fig. 6) der LED 1062a-h angeschlossen sein, um die jeweilige LED 1062a-h zu aktivieren bzw. zu deaktivieren. Der Steuereingang kann ein Eingang eines Schalttransistors der LED-Steuerung sein.

Zudem ist in Fig. 6 ein LED_EN-Signalausgang (optional) der Steuereinheit 1063 gezeigt. Mit diesem LED _EN-Signalausgang kann ein Steuersignal an eine LED-Steuerung gesendet werden, um die LED 1062a-h in den entsprechenden Zeitintervallen 10631, 10632, 10633, 10634 zu aktivieren bzw. zu deaktivieren.

Das LED_EN Signal kann alternativ oder zusätzlich zu den LEDx_OUT Signalen verwendet werden, um die LED 1062a-h in den entsprechenden Zeitintervallen 10631, 10632, 10633, 10634 zu aktivieren bzw. zu deaktivieren.

In Fig. 7 ist der zeitliche Ablauf zur Ansteuerung von LED 1062a-h und Lichtsensor 105 dargestellt. Der zeitliche Ablauf ist zyklisch, das heißt er wiederholt sich nach Ende des Ansteuerzyklus 10635. Ein Ansteuerzyklus 10635 kann eine Zeitdauer T umfassen. Die Zeitdauer T ist so zu wählen, dass sie für das menschliche Auge nicht wahrnehmbar ist.

Der Ansteuerzyklus umfasst jedenfalls ein erstes Zeitintervall 10632 und ein zweites Zeitintervall 10634. Das zweite Zeitintervall 10634 kann dem ersten Zeitintervall 10632 zeitlich im Ansteuerzyklus nachgelagert sein. Das zweite Zeitintervall 10634 kann dem ersten Zeitintervall 10632 zeitlich im Ansteuerzyklus vorgelagert sein (nicht dargestellt in Fig. 7). Das erste Zeitintervall 10632 kann zeitlich wesentlich kürzer sein als das zweite Zeitintervall 10634. Das zweite Zeitintervall 10634 kann ein ganzzahliges Vielfaches des ersten Zeitintervalls 10632 sein.

Das erste Zeitintervall 10632 ist ein Lichtsensor-Aktiv-Zeitintervall, in dem die Steuereinheit 1063 das Lichtausgangssignal SEN_IN des Lichtsensors 105 bzw. der Lichtsensorschaltung 1064 empfängt und auswertet. In diesem ersten Zeitintervall 10632 ist jede LED 1062a-h des Geräts 100 deaktiviert.

Das zweite Zeitintervall 10634 ist ein LED-Anzeige-Aktiv-Zeitintervall, in dem die Steuereinheit 1063 die LED_OUT Signale (Fig. 6) generiert, um die LED 1062a-h zu aktivieren. In diesem zweiten Zeitintervall 10634 kann die Lichtsensorschaltung 1064 oder der Lichtsensor 105 des Geräts 100 deaktiviert sein, beispielsweise mittels Aktivierungs-/Deaktivierungssignal ENABLE (Fig. 6) oder durch Ignorieren des Lichtsensorausgangssignals SEN_IN in der Steuereinheit 1063.

Der Ansteuerzyklus kann zudem ein drittes Zeitintervall 10633 umfassen. Das dritte Zeitintervall 10633 ist ein LED-Setup-Zeitintervall. Das dritte Zeitintervall 10633 ist zwischen dem erstes Zeitintervall 10632 und dem zweiten Zeitintervall 10634 im Zyklus 10635 angeordnet. Mit dem dritten Zeitintervall 10633 kann eine LED-Steuerung für die LED 1062a-h angeschaltet werden, bevor die LED 1062a-h im zweiten Zeitintervall 10634 tatsächlich aktiviert werden. Dieses Zeitintervall 10633 ermöglicht ein gesichertes Hochfahren der LED-Steuerung zum Betreiben der LED 1062a-h und verhindert ungewollte LED-Ströme oder LED-Spannungen an den LED 1062a-h. Das dritte Zeitintervall 10633 kann zeitlich wesentlich kürzer sein als das erste Zeitintervall 10632 und das zweite Zeitintervall 10634. Das dritte Zeitintervall 10633 kann ca. 100 µs oder weniger betragen. Das zweite Zeitintervall 10634 kann ein ganzzahliges Vielfaches des dritten Zeitintervalls 10633 sein.

Der Ansteuerzyklus kann zudem ein viertes Zeitintervall 10631 umfassen. Das vierte Zeitintervall 10631 ist ein Lichtsensor-Setup-Zeitintervall. Das vierte Zeitintervall 10631 ist vor dem erstes Zeitintervall 10631 im Zyklus 10635 bzw. zwischen dem zweiten Zeitintervall 10634 eines ersten Zyklus 10635 und einem neuen ersten Zeitintervall 10631 eines nachfolgenden zweiten Zyklus 10635 angeordnet. Mit dem vierten Zeitintervall 10631 kann die Lichtsensorschaltung 1064 angeschaltet werden, bevor die Lichtsensorschaltung 1064 oder der Lichtsensor 105 im ersten Zeitintervall 10632 tatsächlich aktiviert wird (ENABLE der Fig. 6). Dieses Zeitintervall 10634 ermöglicht ein Einschwingen des Lichtsensors 105 oder der Lichtsensorschaltung 1064 und verhindert, dass ungültige Lichtsensorausgangssignale von der Steuereinheit 1063 ausgewertet werden. Das vierte Zeitintervall 10634 kann zeitlich wesentlich kürzer sein als das erste Zeitintervall 10632 und das zweite Zeitintervall 10634. Das vierte Zeitintervall kann gleich dem dritten Zeitintervall 10633 sein. Das vierte Zeitintervall 10631 kann ca. 100 µs oder weniger betragen. Das zweite Zeitintervall 10634 kann ein ganzzahliges Vielfaches des vierten Zeitintervalls 10631 sein.

Die Auswertung des Lichtsensors 105 in der Steuereinheit 1063 und die Ansteuerung der LED 1062a-h kann wie folgt ablaufen: Die Ansteuerung wird von einem zentralen Scheduler (Zeitsteuerung, Zähler, Teil der Steuereinheit 1063) gesteuert. Dies kann ähnlich erfolgen, wie in Echtzeitbetriebssystemen. Die hier angewendete Steuerung wird in Hardware realisiert, beispielsweise durch einen Hardware-Scheduler, einen Zähler, der in der Steuereinheit 1063 realisiert ist.

Dieser Scheduler steuert die Aktivierung/Deaktivierung von Lichtsensor 105 und LED-Steuerung durch die Ausgabe der Signale "ENABLE" und "LED_OUT" der Fig. 6. Dabei wird zählerwertbasierend sichergestellt, dass keine zeitliche Überlappung zwischen der Aktivierung der LED-Steuerung und der Erfassung des Umgebungslichts stattfindet. Wertet die Steuereinheit 1063 den Lichtsensor 105 bezüglich des vorhandenen Umgebungslichts 300 aus (erstes Zeitintervall 10632), sind die LED 1062a-h deaktiviert (dunkel geschaltet).

Erzeugen die LED 1062a-h ein Anzeigelicht 1045a-h (zweites Zeitintervall 10634), so wird die Auswertung des Lichtsensors 105 in der Steuereinheit unterbrochen oder der Lichtsensor 105 deaktiviert. Dazwischen sind Setupzeiten (viertes Zeitintervall 10631 und drittes Zeitintervall 10633) eingefügt, um die jeweilige Einheit in den inaktiven Zustand versetzen zu können bzw. um die jeweilige Einheit in den aktiven Zustand setzen zu können.

Die Steuereinheit 1063 kann ein FPGA sein, die Programmiersprache ist VHDL.

Der Zyklus 10635 kann eine Periodendauer T (Frequenz f) von mit 1 ms (1 kHz), 100 µs (10 kHz) oder 10 µs (100 kHz) oder mehr haben. Damit kann kein Flackern der LED 1062a-h vom Benutzer wahrgenommen werden. Diese Periodendauer T kann für eine andere Anwendung spezifisch angepasst werden und ist nach oben hin nur von der Grenzfrequenz der eingesetzten Komponenten abhängig.

Fig. 8a zeigt einen erfindungsgemäßen Zeitverlauf zur Ansteuerung der LED 1062a-h und des Lichtsensors 105. Fig. 8b zeigt einen Abschnitt C des erfindungsgemäßen Zeitverlaufs aus der Fig. 8a in vergrößerter Darstellung. Die Figuren 8a und 8b werden nachfolgend zusammen beschrieben.

Die Zeitintervalle 10631, 10632 und 10634 entsprechen den Zeitintervallen 10631, 10632 und 10634 der Fig. 7, der dritte Zeitintervall 10633 der Fig. 7 wurde in Fig. 8a weggelassen. Das vierte Zeitintervall 10631 beträgt hier 96µs. Das erste Zeitintervall 10632 beträgt ca. 100µs. Das zweite Zeitintervall 10634 beträgt ca. 700µs.

Die acht LEDx_OUT Signale der Steuereinheit 1063 der Steuereinheit 1063 sind in Fig. 8a und Fig. 8b als 2-Bit Signale dargestellt. Die LED 1062a-h sind in dieser Ausgestaltung Dual-Color-LED. Zudem ist ein LED_EN Signal als "low_active" Signal gezeigt, mit dem eine LED-Steuerung aktiviert/deaktiviert werden kann.

Zu erkennen ist, dass die LEDx_OUT-Signale und das LED _EN-Signal nur im zweiten Zeitintervall 10634 aktiviert sind und in den übrigen Zeitintervallen 10631 und 10632 deaktiviert sind.

Ein ENABLE-Signal der Steuereinheit 1063 kann ein "high-active" Signal sein. Zu erkennen ist, dass das ENABLE-Signal nur im ersten Zeitintervall 10632 aktiviert ist und in den übrigen Zeitintervallen 10631 und 10634 deaktiviert ist.

In Fig. 8a und Fig. 8b wurde auf das dritte Zeitintervall 10633 verzichtet.

Fig. 9a zeigt eine Lichtsensorschaltung 1064. Der Lichtsensor 105 ist ein Umgebungslichtsensor und hier beispielsweise ein Fototransistor der Fa. Vishay Semiconductors vom Typ TEMT6200FX01.

Dabei kann eine Komparatorschaltung (realisiert mit Komparator TS391 als U3) in der Lichtsensorschaltung 1064 vorgesehen sein. Der Komparator ist auf eine Triggerschwellspannung voreingestellt, beispielsweise 3,175 Volt. Mit steigender Lichtmenge des Umgebungslichts 300 überschreitet (irgendwann) die Eingangsspannung des Lichtsensors 105 (Pin 2 an Komparator U3) diese vordefinierte Schwellspannung, woraufhin das Ausgangssignal SEN_IN des Komparators U3 (Pin 6) auf logisch "1" kippt. In dieser Ausgestaltung ist die Sensorschaltung 1064 also sowohl für das Detektieren als auch für das Auswerten der Umgebungslichtmenge zuständig, sodass die Steuereinheit 1063 bereits ein ausgewertetes Signal empfängt. Ist das Ausgangssignal auf "logisch 1", wird dies als Alarmsituation bewertet und ein Manipulationsversuch an eine entfernte Netzwerkkomponente gemeldet.

Der vordefinierte Schwellwert kann über einen Widerstand R17 eingestellt werden. Beispielsweise wird der vordefinierte Schwellwert so auf die oben beschriebenen Werte eingestellt. Eine Beleuchtungsstärke von 10 Lux entspricht dem Wert einer Straßenbeleuchtung und kann als Richtwert verwendet werden, um den Schwellwert einzustellen.

Fig. 9b zeigt eine Lichtsensorschaltung 1064. Der Lichtsensor 105 ist ein Umgebungslichtsensor und hier beispielsweise eine Fotodiode der Fa.- Vishay Semiconductors vom Typ TEMD6200FX01. Durch die Verwendung einer Fotodiode - anstelle dem Fototransistor der Fig. 9a - kann eine signifikante Verkürzung des vierten Zeitintervall 10631, beispielsweise 50 µs oder niedriger, erreicht werden.

Die Lichtsensorschaltung 1064 der Fig. 9b ist zweiteilig, wobei direkt an der Fotodiode eine Verstärkerschaltung (realisiert als Operationsverstärker MCO6V91U) als erster Teil zum optimalen Erfassen des Umgebungslichts mit der Fotodiode als Lichtsensor 105 vorgesehen ist. Dieser erste Teil stellt ein logarithmisches Lichtsensorsignal einer Komparatorschaltung als zweiten Teil der Lichtsensorschaltung 1064 bereit.

Die Komparatorschaltung (ebenfalls realisiert mit Komparator TS391 als U3) ist auf eine Triggerschwellspannung voreingestellt ist, hier beispielsweise 1,62 Volt. Mit steigender Lichtmenge des Umgebungslichts 300 überschreitet die Eingangsspannung des Lichtsensors 105 (Pin 2 an Komparator U3) (irgendwann) diese vordefinierte Schwellspannung, woraufhin das Ausgangssignal SEN_IN des Komparators U3 (Pin 6) auf logisch "1" kippt. Auch in dieser Ausgestaltung ist die Sensorschaltung 1064 also sowohl für das Detektieren als auch für das Auswerten der Umgebungslichtmenge zuständig, sodass die Steuereinheit 1063 bereits ein ausgewertetes Signal empfängt. Ist das Ausgangssignal auf "logisch 1", wird dies als Alarmsituation bewertet und ein Manipulationsversuch an eine entfernte Netzwerkkomponente gemeldet.

Der vordefinierte Schwellwert kann über die Widerstände R18/R19 eingestellt werden. Beispielsweise wird der vordefinierte Schwellwert so auf die oben beschriebenen Werte eingestellt. Eine Beleuchtungsstärke von 10 Lux entspricht dem Wert einer Straßenbeleuchtung und kann als Richtwert verwendet werden, um den Schwellwert einzustellen.

Für geplante Wartungsarbeiten kann die Alarmierung/Meldung/Speicherlöschung deaktiviert werden. Dazu empfängt das Gerät 100 von der entfernten Netzwerkkomponente einen entsprechenden Befehl/Instruktion. Somit sorgen durchzuführende Wartungsarbeiten nicht für eine Alarmierung oder Deaktivierung bzw. Löschung von Speicherinhalten des Geräts 100.

Für geplante Wartungsarbeiten kann die Alarmierung/Meldung/Speicherlöschung auch zweistufig erfolgen. In einer ersten Alarmstufe meldet das Gerät 100 die Alarmsituation an die entfernte Netzwerkkomponente. Diese prüft, ob Wartungsarbeiten geplant/angekündigt sind und sendet eine entsprechende Bestätigung zurück an das Gerät 100. Wird innerhalb eines bestimmten Zeitrahmens keine Bestätigung im Gerät 100 empfangen, so wird von einem Manipulationsversuch/Angriff ausgegangen und das Gerät 100 gesperrt und/oder Speicherinhalt gelöscht. Somit sorgen angekündigte Wartungsarbeiten nicht für eine Alarmierung oder Deaktivierung bzw. Löschung von Speicherinhalten des Geräts 100.

Fig. 10 zeigt eine Außenbereichsvorrichtung 200 mit montiertem Gerät 100 in einer Seitenansicht. Die Außenbereichsvorrichtung 200, beispielsweise ein Mast, weist eine Öffnung 210 auf. Durch die Öffnung 210 kann ein ansonsten lichtdichter Innenraum/Hohlraum der Außenbereichsvorrichtung 200 zugänglich sein. Die Öffnung 210 kann durch eine Klappe (nicht in Fig. 10 dargestellt) verschließbar und öffenbar sein.

Das Gerät 100 ist dabei derart in dem Hohlraum montiert, dass die vierte Gehäusewand 1014 von außen durch die Öffnung 210 der Außenbereichsvorrichtung 200 sichtbar ist.

Damit kann die Anzeige 105 vom Benutzer wahrgenommen werden. Mit Öffnen der Öffnung 210 dringt Umgebungslicht 300 in den Hohlraum ein. Diese Eindringen wird vom Sensor 105 erfasst und führt bei unangemeldetem Öffnen der Öffnung 210 zu einer Alarmsituation in deren Folge das Gerät 100 gesperrt, ein Speicherinhalt gelöscht und/oder eine entfernte Netzwerkkomponente gewarnt wird.

Bei geschlossener Öffnung 210 ist der Hohlraum der Außenbereichsvorrichtung lichtdicht. Zur Steigerung der Dunkelheit im Hohlraum kann ein passendes EPDM Formteil auf die Innenseite der Klappe (nicht in Fig. 10 dargestellt) dargestellt angeordnet (geklebt) werden. Dieses EPDM-Formteil kann im geschlossenen Zustand der Öffnung den Lichtsensor 105 abdecken.

Die Außenbereichsvorrichtung 200 kann eine Montagehalterung 220 umfassen. Die Montagehalterung 220 kann eine Schiene oder eine Tragschiene, bevorzugt eine Hutschiene, sein.

In der Außenbereichsvorrichtung 200 kann das Gerät 100 angeordnet sein. Das Gerät 100 kann an der Montagehalterung 220 montiert oder fixiert sein. Insbesondere ist eine Halterung des Geräts 100 mit dem Gerät 100 und mit der Montagehalterung 220 verbunden.

Die Halterung des Geräts kann ein Halteelement umfassen (nicht dargestellt in Fig. 10). Das Halteelement kann mit einem Abschnitt der Halterung verbunden sein oder dort angeordnet sein, der eine Gehäusewand (1011, 1012, 1013, 1014) des Gehäuses 101 überlagert oder bedeckt. Das Halteelement kann ein Magnet, insbesondere ein Permanentmagnet, eine Schienenklammer, insbesondere eine Hutschienenklammer, eine Schraube, ein Bolzen, ein Rastelement, ein Klemmelement, ein Klettelement und/oder ein Klebeelement sein. Bevorzugt ist das Halteelement eine Klammer, bevorzugt eine Schienenklammer, bevorzugte eine Hutschienenklammer.

Durch das Halteelement kann das Gerät 100 mit einer Außenbereichsvorrichtung 200 verbunden sein. Dabei kann das Halteelement mit einer Montagehalterung 220 der Außenbereichsvorrichtung 20 verbunden sein. Die Montagehalterung 220 ist insbesondere eine Hutschiene.

Die Unterbringung eines Geräts 100 in einen Mast-Innenraum ist derart herausfordernd, da der verfügbare Raum in dem Mast limitiert ist. Ebenso ist ein Zugang zu dem Mast-Innenraum in der Regel lediglich über eine kleinflächige Wartungsöffnung in dem Mast möglich, wodurch beispielsweise die Installation des Geräts 100 in dem Mast, aber auch Wartungsarbeiten an den Geräten erschwert ist.

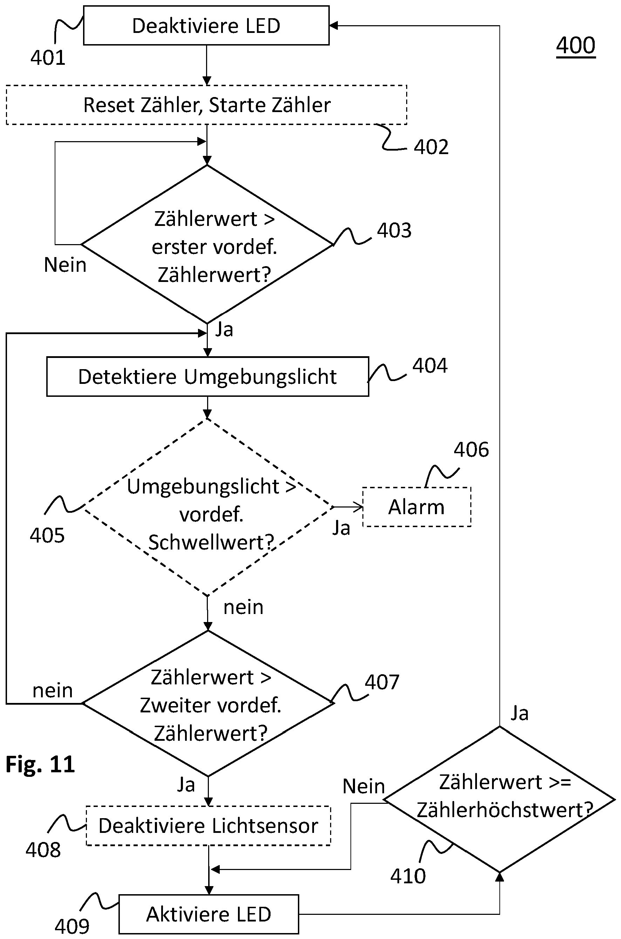

Fig.11 zeigt ein Verfahrensablaufdiagramm eines erfindungsgemäßen Verfahrens 400. Das Verfahren 400 der Fig. 11 kann zum Betreiben des Geräts 100 gemäß der vorhergehend beschriebenen Art vorgesehen sein. Optionale Schritte sind in Fig. 11 gestrichelt dargestellt. Das Verfahren 400 läuft zyklisch ab, d.h. es wiederholt sich ständig. Die gezeigten Verfahrensschritte können in der dargestellten Reihenfolge ablaufen.

In einem ersten Schritt 401 werden alle Lichtquellen 1062a-h im Gehäuse 101 durch eine Steuereinheit 1063 des Geräts 101 deaktiviert. In diesem Schritt 401 erfolgt implizit ein Zurücksetzen eines Zählers und das Starten eines Zählers der Steuereinheit 1063. Alternativ erfolgt das Zurücksetzen des Zählers und das Starten des Zählers der Steuereinheit 1063 im Folgeschritt 402.

Der gestartete Zähler inkrementiert jeweils seinen Zählerwert automatisch nach Ablauf einer vordefinierten Zeiteinheit. Die vordefinierte Zeiteinheit kann ein ganzzahliges Vielfaches eines Betriebstakts der Steuereinheit 1063 sein. Die vordefinierte Zeiteinheit kann einen Wert von wenige Mikrosekunden bis zu mehreren Millisekunden umfassen.

Bevorzugt ist das Verfahren 400 so konfiguriert, dass ein Benutzer kein LED-Flackern wahrnehmen kann. Damit sollte ein Zyklus 10635 des Verfahrens 400 binnen der in Fig. 7, 8a und 8b benannten Zeitdauer T abgeschlossen sein. Diese Zeitdauer kann ein ganzzahliges Vielfaches der vordefinierten Zeiteinheit des Zählers sein. Beispielsweise kann ein Wert entsprechend einer Zweierpotenz als Vielfaches gewählt werden, beispielsweise 2⁴, 2⁵, 2^{6,} 2⁷, 2⁸, 2⁹ oder 2¹⁰. Bevorzugt die Zeitdauer T = 256 (2⁸) Zeiteinheiten des Zählers.

Im Folgeschritt 403 wird geprüft, ob der aktuelle Zählerwert größer als ein vordefinierter erster Zählerwert ist. Ergibt die Prüfung (Nein-Fall), dass der aktuelle Zählerwert nicht größer als der vordefinierte erste Zählerwert ist, erfolgt die Prüfung im Schritt 403 von vorn. Diese Prüfung erfolgt so lange, bis der aktuelle Zählerwert größer ist als der vordefinierte erste Zählerwert (Ja-Fall des Schritts 403). Damit wird das viertes Zeitintervall 10631 des Zyklus 10635 abgebildet, siehe auch Fig. 7.

Ergibt die Prüfung im Schritt 403 (Ja-Fall), dass der aktuelle Zählerwert größer als der vordefinierte erste Zählerwert ist, wird die Umgebungslicht 300 mittels Lichtsensor 105 im Gehäuse 101 detektiert.

Im optionalen Folgeschritt 405 wird geprüft, ob das detektierte Umgebungslicht 300 größer ist als ein vordefinierter Schwellwert. Diese Prüfung im Schritt 405 kann durch einen Komparator in einer Lichtsensorschaltung 1064 (Fig. 9) bspw. mittels Komparator U3 erfolgen. Diese Prüfung im Schritt 405 kann alternativ oder zusätzlich durch die Steuereinheit 1063 erfolgen, beispielsweise in dem ein permanent zur Verfügung gestelltes Lichtsensorausgangssignal innerhalb einer Zählerwertspanne von erstem vordefinierten Zählerwert bis zweitem vordefinierten Zählerwert durch die Steuereinheit 1063 ausgewertet wird.

Ergibt die Prüfung im Schritt 405 (Ja-Fall), dass das detektierte Umgebungslicht 300 größer ist als ein vordefinierter Schwellwert ist, wird ein Alarmsignal im Schritt 406 durch die Steuereinheit 1063 generiert.

Ergibt die Prüfung im Schritt 405 (Nein-Fall), dass das detektierte Umgebungslicht 300 nicht größer ist als ein vordefinierter Schwellwert ist, erfolgt eine weitere Prüfung im Schritt 407, ob der aktuelle Zählerwert größer als ein vordefinierter zweiter Zählerwert ist.

Ergibt die Prüfung im Schritt 407 (Nein-Fall), dass der aktuelle Zählerwert nicht größer als der vordefinierte zweite Zählerwert ist, wird das Umgebungslicht (weiter) detektiert (Schritt 404). Diese Schrittabfolge 404 - 405 - 407 - 404 erfolgt so lange, bis im Schritt 407 festgestellt wird, dass der aktuelle Zählerwert größer ist als der vordefinierte zweite Zählerwert (Ja-Fall des Schritts 407) oder im Schritt 405 der Ja-Fall festgestellt wird. Damit wird das erste Zeitintervall 10632 des Zyklus 10635 abgebildet, siehe auch Fig. 7.

Ergibt die Prüfung im Schritt 403 (Ja-Fall), dass der aktuelle Zählerwert größer als der vordefinierte zweite Zählerwert ist, wird der Lichtsensor im optionalen Schritt 408 deaktiviert. Dieser Schritt 408 kann ausgelassen werden, wenn die Steuereinheit 1063 das Lichtsensorsignal selbst auswertet, da in diesem Fall, die Steuereinheit 1063 das Lichtsensorausgangssignal einfach ignoriert.

Im Folgeschritt 409 werden alle Lichtquellen 1062a-h im Gehäuse 101 durch die Steuereinheit 1063 des Geräts 101 aktiviert.

Im Folgeschritt 410 wird geprüft, ob der aktuelle Zählerwert größer oder gleich groß ist wie ein Zählerhöchstwert. Der Zählerhöchstwert repräsentiert die Zeitdauer T des Zyklus 10635 (siehe Fig. 7).

Ergibt die Prüfung im Schritt 410 (Nein-Fall), dass der aktuelle Zählerwert nicht größer oder nicht gleich dem Zählerhöchstwert ist, bleiben die LED aktiviert (Schritt 409). Diese Schrittabfolge 409 - 410 - 409 erfolgt so lange, bis der aktuelle Zählerwert größer oder gleich ist zum vordefinierten Zählerhöchstwert (Ja-Fall des Schritts 410). Damit wird das zweite Zeitintervall 10634 des Zyklus 10635 abgebildet, siehe auch Fig. 7.

Ergibt die Prüfung im Schritt 410 (Ja-Fall), dass der aktuelle Zählerwert größer oder gleich dem Zählerhöchstwert ist, gilt der Zyklus des Verfahrens 400 als beendet und es wird ein neuer Zyklus des gleichen Verfahrens 400 beginnend mit Schritt 401 begonnen. Damit wird der Zähler wieder auf den Zählerwert Null zurückgesetzt (implizit im Schritt 401 oder explizit im Schritt 402), wenn der vordefinierte Zählerhöchstwert (T) erreicht oder überschritten wurde.

### BEZUGSZEICHENLISTE

- 100: Gerät
- 101: Gehäuse
- 1011-1014: Gehäusewand
- 10141: Gehäusewandtiefe
- 1015-1016: Gehäusedeckel
- 1015a, 1016a: Gehäusefixierung
- 102: Geräteanschluss
- 1021, 1021a-d: Funktionseinheitsanschluss
- 1022, 1022a-b: Netzwerkanschlussträger für Netzwerkanschluss
- 1023: Energieversorgungsanschluss
- 103: Kühlrippe
- 104: Anzeige
- 1041a-h: Anzeige-Gehäusedurchbohrung
- 1042a-i: Lichtleitelement
- 1043: Lichtleitelementeträger
- 1044a-h: Streulicht
- 10441a-h: Direktes Streulicht
- 10442a-h: Indirektes Streulicht
- 1045: Anzeigelicht
- 105: Lichtsensor
- 1051: Lichtsensor-Gehäusedurchbohrung
- 106: Leiterplatte, Platine
- 1061: Bauelemente
- 1062a-h: Lichtquelle, LED
- 1063: Steuereinheit
- 10631: Sensor-Setup-Zeitintervall (viertes Zeitintervall)
- 10632: Sensor-Aktiv-Zeitintervall (erstes Zeitintervall)
- 10633: LED-Setup-Zeitintervall (drittes Zeitintervall)
- 10634: LED-Anzeige-Aktiv-Zeitintervall (zweites Zeitintervall)
- 10635: Ansteuerzyklus wiederholend
- 1064: Lichtsensorschaltung
- 107: Abstand zwischen LED zu Gehäuseinnenseite
- 108: Abstand zwischen LED und Lichtelement
- 109: Folierung
- 200: Außenbereichsvorrichtung
- 210: Öffnung
- 220: Montagehalterung
- 300: Umgebungslicht
- 400: Verfahren mit Verfahrensschritten
- A-A': Schnittlinie
- B: Bereich
- C: Abschnitt

## Patentansprüche

1. Ein Gerät (100) mit einem Gehäuse (101), wobei das Gerät (100) geeignet ist, in einen Hohlraum einer Außenbereichsvorrichtung eingebracht zu werden,
- wobei das Gerät (100) einen Lichtsensor (105) zum Detektieren von Umgebungslicht aufweist;
- wobei das Gerät (100) ferner zumindest eine Lichtquelle (1062a, ... 1062h) aufweist;
**dadurch gekennzeichnet, dass**
- die zumindest eine Lichtquelle (1062a, ... 1062h) im Gehäuse (101) angeordnet ist,
- wobei das Gehäuse (101) zumindest eine Gehäusedurchbohrung (1041a, ..., 1041h, 1051) aufweist, wobei die Gehäusedurchbohrung (1041a, ..., 1041h, 1051) eingerichtet ist zum Weiterleiten von mittels der zumindest einen Lichtquelle (1062a, ... 1062h) erzeugten Lichts aus dem Gehäuse (101) heraus;
- wobei der Lichtsensor (105) im Gehäuse (101) angeordnet ist und wobei die zumindest eine Gehäusedurchbohrung (1041a, ..., 1041h, 1051) zudem eingerichtet ist ein Umgebungslicht (300) zu dem Lichtsensor (105) weiterzuleiten;
- wobei jede Lichtquelle (1062a, ... 1062h) beabstandet (107, 108) von einer Gehäuseinnenseite des Gehäuses (101) angeordnet ist, wobei aufgrund des Abstands (107, 108) das erzeugte Licht in den Lichtsensor (105) einkoppelbar ist;
- wobei das Gerät (101) eine Steuereinheit (1063) umfasst, wobei die Steuereinheit (1063) eine Zeitsteuerung umfasst, wobei die Zeitsteuerung die Steuereinheit (1063) zyklisch dazu veranlasst, jede Lichtquelle (1062a-h) in einem Zeitintervall (10631, 10632) einer Ansteuerung zu deaktivieren, in dem das Umgebungslicht mittels des Lichtsensor (105) von der Steuereinheit (1063) zu detektieren ist;
- wobei die Steuereinheit (1063) dazu eingerichtet ist, ein Lichtsensorausgangssignal des Lichtsensors (105) zu Zeitpunkten, in denen die Lichtquellen aktiviert sind, zu ignorieren und das Lichtsensorausgangssignal zu Zeitpunkten, in denen die Lichtquellen deaktiviert sind, auszuwerten; und
- wobei die Steuereinheit (1063) weiter dazu eingerichtet ist, ein Alarmsignal zu generieren, wenn das detektierte Umgebungslicht einen vordefinierten Schwellwert überschreitet.

2. Das Gerät (100) nach Anspruch 1, wobei das Gehäuse (101) eine Lichtsensor-Gehäusedurchbohrung (1051) als eine der zumindest einen Gehäusedurchbohrung umfasst, wobei die Lichtsensor-Gehäusedurchbohrung (1051) fluchtend mit dem im Gehäuse (101) angeordneten Lichtsensor (15) ausgerichtet ist und die Lichtsensor-Gehäusedurchbohrung (1051) zum Weiterleiten des Umgebungslichts zu dem Lichtsensor (105) eingerichtet ist.

3. Das Gerät (100) nach einem der vorhergehenden Ansprüche, wobei zum Weiterleiten des erzeugten Lichts aus dem Gehäuse (101) heraus das Gehäuse (101) zumindest eine Anzeige-Gehäusedurchbohrung (1041a-h) als eine der zumindest einen Gehäusedurchbohrung umfasst, wobei jede Anzeige-Gehäusedurchbohrung (1041a-h) fluchtend mit jeweils einer Lichtquelle (1062a-h) ausgerichtet ist.

4. Das Gerät (100) nach einem der vorhergehenden Ansprüche,
- wobei das Gehäuse (101) zum Weiterleiten des Umgebungslichts zu dem im Gehäuse (101) befindlichen Lichtsensor (105) eine Lichtsensor-Gehäusedurchbohrung (1051) als eine erste Gehäusedurchbohrung der zumindest einen Gehäusedurchbohrung umfasst und
- wobei das Gehäuse (101) zum Weiterleiten des erzeugten Lichts aus dem Gehäuse (101) heraus zumindest eine, bevorzugt zwei, mehr bevorzugt vier, mehr bevorzugt acht, mehr bevorzugt zehn Anzeige-Gehäusedurchbohrungen (1041a-h) als zweite Gehäusebohrungen der zumindest einen Gehäusedurchbohrung umfasst, wobei jede Anzeige-Gehäusedurchbohrung (1041a-h) fluchtend mit jeweils einer Lichtquelle (1062a-h) ausgerichtet ist.

5. Das Gerät (100) nach Anspruch 4, wobei die erste Gehäusedurchbohrung und die zweiten Gehäusedurchbohrungen in einer gemeinsamen Gehäusewand (1011, 1012, 1013, 1014, 1015, 1016) des Gehäuses (101) angeordnet sind.

6. Das Gerät (100) nach einem der vorhergehenden Ansprüche, wobei im Gehäuse (101) eine Leiterplatte (106) angeordnet ist, wobei der Lichtsensor (105) und die zumindest eine Lichtquelle (1062a-h) benachbart auf einer der zumindest einen Gehäusedurchbohrung (1051, 1041a-h) zugewandten Oberseite der Leiterplatte (106) angeordnet sind.

7. Das Gerät (100) nach einem der Ansprüche 4-5, wobei zum Weiterleiten im Gehäuse (101) zumindest ein Lichtleitelement (1042a-i)) angeordnet ist, wobei:
- ein Lichtleitelement (1042a-h) jeweils zwischen der zumindest einen, bevorzugt zwei, mehr bevorzugt vier, mehr bevorzugt acht, mehr bevorzugt zehn Anzeige-Gehäusedurchbohrungen (1041a-h) und der entsprechenden Lichtquelle (1062a-f) angeordnet ist; und/oder
- ein Lichtleitelement (1042i) zwischen der Lichtsensor-Gehäusedurchbohrung (1051) und dem Lichtsensor (105) angeordnet ist.

8. Das Gerät (100) nach einem der vorhergehenden Ansprüche, wobei die Steuereinheit (1063) einen Zähler umfasst, wobei ein Zählerwert des Zählers jeweils nach Ablauf einer vordefinierten Zeiteinheit inkrementiert wird und wobei der Zähler bei Erreichen eines vordefinierten Zählerhöchstwerts auf den Zählerwert Null zurückgesetzt wird.

9. Das Gerät (100) nach Anspruch 8, wobei bei einem vordefinierten ersten Zählerwert des Zählers alle Lichtquellen (1062a-h) deaktiviert werden, um das Umgebungslicht im Gehäuse (101) zu detektieren, wobei bei einem vordefinierten zweiten Zählerwert des Zählers, der größer als der vordefinierte erste Zählerwert des Zählers ist, die Lichtquellen (1062a-h) aktiviert werden, wobei bevorzugt zwischen dem Zeitpunkt des Deaktivierens der Lichtquelle (1062a-h) und dem Zeitpunkt des Detektierens der Umgebungslicht eine vordefinierte Zeitspanne ist.

10. System aufweisend eine Außenbereichsvorrichtung (200), insbesondere ein Mast, und ein Gerät (100) gemäß einem der vorhergehenden Ansprüche, die Außenbereichsvorrichtung (200) aufweisend eine Montagehalterung (220) für dasGerät (100), wobei die Außenbereichsvorrichtung (200) ferner eine Öffnung (210) zum Einbringen in und zum Herausnehmen des Geräts (100) aus dem Hohlraum der Außenbereichsvorrichtung (200) aufweist, wobei die zumindest eine Gehäusedurchbohrung (1041a, ..., 1041h, 1051) mehrere Gehäusedurchbohrungen (1051, 1041a-h) aufweist, die in einer gemeinsamen Gehäusewand (1011, 1012, 1013, 1014, 1015, 1016) des Gehäuses (101) des Geräts (100) angeordnet sind, wobei im montierten Zustand des Geräts (100) die gemeinsame Gehäusewand (1011, 1012, 1013, 1014, 1015, 1016) des Gehäuses (101) der Öffnung (210) der Außenbereichsvorrichtung (200) zugewandt ist.

11. Ein Verfahren (400) zum Betreiben eines Geräts (100) gemäß einem der Ansprüche 1-9, wobei das Verfahren (400) zyklisch abläuft und die Verfahrensschritte in dieser Reihenfolge umfasst:
- Deaktivieren (401) aller Lichtquellen (1062a-h) im Gehäuse (101) durch die Steuereinheit (1063) des Geräts (101);
- Detektieren (404) des Umgebungslichts (300) mittels Lichtsensor (105) im Gehäuse (101), wenn ein erster vordefinierter Zählerwert eines Zählers überschritten (403) wurde;
- Aktivieren (409) der Lichtquellen (10652a-h) im Gehäuse (101), wenn ein zweiter vordefinierter Zählerwert des Zählers überschritten (407) wurde;
- Zurücksetzen (402) des Zählers auf den Zählerwert Null, wenn ein vordefinierter Zählerhöchstwert (T) erreicht oder überschritten (410) wurde.

## Claims

1. An apparatus (100) comprising a housing (101), the apparatus (100) being adapted to be inserted into a cavity of an outdoor device,
- the apparatus (100) comprising a light sensor (105) for detecting ambient light;
- the apparatus (100) further comprising at least one light source (1062a, ... 1062h);
**characterized in that**
- the at least one light source (1062a, ... 1062h) is arranged in the housing (101),
- the housing (101) comprising at least one housing through-hole (1041a, ... 1041h, 1051), the housing through-hole (1041a, ... 1041h, 1051) being configured for forwarding light generated by means of the at least one light source (1062a, ... 1062h) out of the housing (101);
- the light sensor (105) being arranged in the housing (101) and the at least one housing through-hole (1041a, ... 1041h, 1051) being further configured for forwarding ambient light (300) to the light sensor (105);
- each light source (1062a, ... 1062h) being arranged at a distance (107, 108) from a housing inner side of the housing (101), the generated light being adapted to be coupled into the light sensor (105) due to the distance (107, 108);
- the apparatus (101) comprising a control unit (1063), the control unit (1063) comprising a timing controller, the timing controller cyclically causing the control unit (1063) to deactivate each light source (1062a-h) in a time interval (10631, 10632) of an actuation in which the ambient light is to be detected by means of the light sensor (105) by the control unit (1063);
- the control unit (1063) being configured to ignore a light sensor output signal of the light sensor (105) at times in which the light sources are activated and to evaluate the light sensor output signal at times in which the light sources are deactivated; and
- the control unit (1063) being further configured to generate an alarm signal if the detected ambient light exceeds a predefined threshold value.

2. The apparatus (100) according to claim 1, wherein the housing (101) comprises a light sensor housing through-hole (1051) as one of the at least one housing through-hole, the light sensor housing through-hole (1051) being aligned flush with the light sensor (105) arranged in the housing (101) and the light sensor housing through-hole (1051) being configured for forwarding the ambient light to the light sensor (105).

3. The apparatus (100) according to one of the preceding claims, wherein, for forwarding the generated light out of the housing (101), the housing (101) comprises at least one display housing through-hole (1041a-h) as one of the at least one housing through-hole, each display housing through-hole (1041a-h) being aligned flush with a respective light source (1062a-h).

4. The apparatus (100) according to one of the preceding claims,
- wherein, for forwarding the ambient light to the light sensor (105) located in the housing (101), the housing (101) comprises a light sensor housing through-hole (1051) as a first housing through-hole of the at least one housing through-hole and
- wherein, for forwarding the generated light out of the housing (101), the housing (101) comprises at least one, preferably two, more preferably four, more preferably eight, more preferably ten display housing through-holes (1041a-h) as second housing through-holes of the at least one housing through-hole, each display housing through-hole (1041a-h) being aligned flush with a respective light source (1062a-h).

5. The apparatus (100) according to claim 4, wherein the first housing through-hole and the second housing through-holes are arranged in a common housing wall (1011, 1012, 1013, 1014, 1015, 1016) of the housing (101).

6. The apparatus (100) according to one of the preceding claims, wherein a printed circuit board (106) is arranged in the housing (101), the light sensor (105) and the at least one light source (1062a-h) being arranged adjacently on an upper side of the printed circuit board (106) facing the at least one housing through-hole (1051, 1041a-h).

7. The apparatus (100) according to one of claims 4-5, wherein, for forwarding in the housing (101), at least one light guide element (1042a-i)) is arranged, wherein:
- a light guide element (1042a-h) is arranged in each case between the at least one, preferably two, more preferably four, more preferably eight, more preferably ten display housing through-holes (1041a-h) and the corresponding light source (1062a-f); and/or
- a light guide element (1042i) is arranged between the light sensor housing through-hole (1051) and the light sensor (105).

8. The apparatus (100) according to one of the preceding claims, wherein the control unit (1063) comprises a counter, a counter value of the counter being incremented in each case after expiry of a predefined time unit, and the counter being reset to the counter value zero when a predefined counter maximum value is reached.

9. The apparatus (100) according to claim 8, wherein, in the case of a predefined first counter value of the counter, all light sources (1062a-h) are deactivated in order to detect the ambient light in the housing (101), wherein, in the case of a predefined second counter value of the counter which is greater than the predefined first counter value of the counter, the light sources (1062a-h) are activated, a predefined time period preferably being between the time of the deactivation of the light source (1062a-h) and the time of the detection of the ambient light.

10. A system comprising an outdoor device (200), in particular a mast, and an apparatus (100) according to one of the preceding claims, the outdoor device (200) comprising a mounting mount (220) for the apparatus (100), the outdoor device (200) further comprising an opening (210) for inserting into and for removing the apparatus (100) from the cavity of the outdoor device (200), the at least one housing through-hole (1041a, ..., 1041h, 1051) comprising a plurality of housing through-holes (1051, 1041a-h) which are arranged in a common housing wall (1011, 1012, 1013, 1014, 1015, 1016) of the housing (101) of the apparatus (100), the common housing wall (1011, 1012, 1013, 1014, 1015, 1016) of the housing (101) facing the opening (210) of the outdoor device (200) in the mounted state of the apparatus (100).

11. A method (400) for operating an apparatus (100) according to one of claims 1-9, the method (400) running cyclically and comprising the method steps in this order:
- deactivating (401) all light sources (1062a-h) in the housing (101) by the control unit (1063) of the apparatus (101);
- detecting (404) the ambient light (300) by means of a light sensor (105) in the housing (101) if a first predefined counter value of a counter has been exceeded (403);
- activating (409) the light sources (10652a-h) in the housing (101) if a second predefined counter value of the counter has been exceeded (407);
- resetting (402) the counter to the counter value zero if a predefined counter maximum value (T) has been reached or exceeded (410).

## Revendications

1. Appareil (100) ayant un boîtier (101), dans lequel l'appareil (100) est adapté pour être introduit dans une cavité d'un dispositif de plein air,
- dans lequel l'appareil (100) comporte un capteur de lumière (105) pour détecter de la lumière ambiante ;
- dans lequel l'appareil (100) comporte en outre au moins une source lumineuse (1062a, ... 1062h) ;
**caractérisé en ce que**
- la au moins une source lumineuse (1062a, ... 1062h) est agencée dans le boîtier (101),
- dans lequel le boîtier (101) comporte au moins un trou de boîtier (1041a, ..., 1041h, 1051), dans lequel le trou de boîtier (1041a, ..., 1041h, 1051) est conçu pour transmettre hors du boîtier (101) de la lumière générée au moyen de la au moins une source lumineuse (1062a, ... 1062h) ;
- dans lequel le capteur de lumière (105) est agencé dans le boîtier (101) et dans lequel le au moins un trou de boîtier (1041a, ..., 1041h, 1051) est en outre conçu pour transmettre une lumière ambiante (300) au capteur de lumière (105) ;
- dans lequel chaque source lumineuse (1062a, ... 1062h) est agencée à une certaine distance (107, 108) d'un côté intérieur de boîtier du boîtier (101), dans lequel la lumière générée peut être couplée dans le capteur de lumière (105) sur la base de la distance (107, 108) ;
- dans lequel l'appareil (101) comprend une unité de commande (1063), dans lequel l'unité de commande (1063) comprend une temporisation, dans lequel la temporisation amène cycliquement l'unité de commande (1063) à désactiver chaque source lumineuse (1062a-h) sur un intervalle de temps (10631, 10632) d'une commande, dans lequel la lumière ambiante doit être détectée au moyen du capteur de lumière (105) de l'unité de commande (1063) ;
- dans lequel l'unité de commande (1063) est conçue pour ignorer un signal de sortie de capteur de lumière du capteur de lumière (105) à des moments où les sources lumineuses sont activées, et pour évaluer le signal de sortie de capteur de lumière à des moments où les sources lumineuses sont désactivées ; et
- dans lequel l'unité de commande (1063) est en outre conçue pour générer un signal d'alarme lorsque la lumière ambiante détectée dépasse une valeur de seuil prédéfinie.

2. Appareil (100) selon la revendication 1, dans lequel le boîtier (101) comprend un trou de boîtier de capteur de lumière (1051) en tant qu'un des au moins un trou de boîtier, dans lequel le trou de boîtier de capteur de lumière (1051) est orienté de manière alignée avec le capteur de lumière (15) agencé dans le boîtier (101) et le trou de boîtier de capteur de lumière (1051) est conçu pour transmettre la lumière ambiante au capteur de lumière (105).

3. Appareil (100) selon l'une des revendications précédentes, dans lequel, pour transmettre hors du boîtier (101) la lumière générée, le boîtier (101) comprend au moins un trou de boîtier d'affichage (1041a-h) en tant qu'un des au moins un trou de boîtier, dans lequel chaque trou de boîtier d'affichage (1041a-h) est respectivement orienté de manière alignée avec une source lumineuse (1062a-h).

4. Appareil (100) selon l'une des revendications précédentes,
- dans lequel, pour transmettre la lumière ambiante au capteur de lumière (105) situé dans le boîtier (101), le boîtier (101) comprend un trou de boîtier de capteur de lumière (1051) en tant que premier trou de boîtier des au moins un trou de boîtier et
- dans lequel, pour transmettre la lumière générée hors du boîtier (101), le boîtier (101) comprend au moins un, de manière préférée deux, de manière plus préférée quatre, de manière plus préférée huit, de manière plus préférée dix trous de boîtier d'affichage (1041a-h), en tant que seconds trous de boîtier des au moins un trou de boîtier, dans lequel chaque trou de boîtier d'affichage (1041a-h) est respectivement orienté de manière alignée avec une source lumineuse (1062a-h).

5. Appareil (100) selon la revendication 4, dans lequel le premier trou de boîtier et les seconds trous de boîtier sont agencés dans une paroi de boîtier commune (1011, 1012, 1013, 1014, 1015, 1016) du boîtier (101).

6. Appareil (100) selon l'une des revendications précédentes, dans lequel une carte imprimée (106) est agencée dans le boîtier (101), dans lequel le capteur de lumière (105) et la au moins une source lumineuse (1062a-h) sont agencés de manière adjacente à une face supérieure de la carte imprimée (106) dirigée vers le au moins un trou de boîtier (1051, 1041a-h).

7. Appareil (100) selon l'une des revendications 4 à 5, dans lequel, pour la transmission dans le boîtier (101), au moins un élément de conduction de lumière (1042a-i) est agencé, dans lequel :
- un élément de conduction de lumière (1042a-h) est respectivement agencé entre le au moins un, de manière préférée deux, de manière plus préférée quatre, de manière plus préférée huit, de manière plus préférée dix trous de boîtier d'affichage (1041a-h) et la source lumineuse (1062a-f) correspondante ; et/ou
- un élément de conduction de lumière (1042i) est agencé entre le trou de boîtier du capteur de lumière (1051) et le capteur de lumière (105).

8. Appareil (100) selon l'une des revendications précédentes, dans lequel l'unité de commande (1063) comprend un compteur, dans lequel une valeur de compteur du compteur est respectivement incrémentée après l'expiration d'une unité de temps prédéfinie et dans lequel le compteur est remis à la valeur de compteur zéro lorsqu'une valeur de compteur maximale prédéfinie est atteinte.

9. Appareil (100) selon la revendication 8, dans lequel à une première valeur de compteur prédéfinie du compteur, toutes les sources lumineuses (1062a-h) sont désactivées afin de détecter la lumière ambiante dans le boîtier (101), dans lequel à une seconde valeur de compteur prédéfinie du compteur, qui est supérieure à la première valeur de compteur prédéfinie du compteur, les sources lumineuses (1062a-h) sont activées, dans lequel un intervalle de temps prédéfini est de préférence compris entre le moment de la désactivation de la source lumineuse (1062a-h) et le moment de la détection de la lumière ambiante.

10. Système comportant un dispositif de plein air (200), en particulier un pylône, et un appareil (100) selon l'une des revendications précédentes, le dispositif de plein air (200) comportant un support de montage (220) pour l'appareil (100), dans lequel le dispositif de plein air (200) comporte en outre une ouverture (210) pour introduire l'appareil (100) dans la cavité du dispositif de plein air (200) et pour l'en extraire, dans lequel le au moins un trou de boîtier (1041a, ..., 1041h, 1051) comporte plusieurs trous de boîtier (1051, 1041ah) qui sont agencés dans une paroi de boîtier commune (1011, 1012, 1013, 1014, 1015, 1016) du boîtier (101) de l'appareil (100), dans lequel à l'état monté de l'appareil (100), la paroi de boîtier commune (1011, 1012, 1013, 1014, 1015, 1016) du boîtier (101) est dirigée vers l'ouverture (210) du dispositif de plein air (200).

11. Procédé (400) pour faire fonctionner un appareil (100) selon l'une des revendications 1 à 9, dans lequel le procédé (400) s'exécute de manière cyclique et comprend les étapes de procédé dans l'ordre suivant :
- désactiver (401) toutes les sources lumineuses (1062a-h) dans le boîtier (101) par l'unité de commande (1063) de l'appareil (101) ;
- détecter (404) la lumière ambiante (300) au moyen d'un capteur de lumière (105) dans le boîtier (101) lorsqu'une première valeur de compteur prédéfinie d'un compteur a été dépassée (403) ;
- activer (409) les sources lumineuses (10652a-h) dans le boîtier (101) lorsqu'une seconde valeur de compteur prédéfinie du compteur a été dépassée (407) ;
- remettre (402) le compteur à la valeur de compteur zéro lorsqu'une valeur de compteur maximale prédéfinie (T) du compteur a été atteinte ou dépassée (410).
